# EUROPEAN PATENT SPECIFICATION

(11) **EP 2 709 117 B1**
(45) Date of publication and mention of the grant of the patent: **06.05.2020**
(21) Application number: 13183573.8
(22) Date of filing: 09.09.2013
(51) Int. Cl.: H01F 1/113, H01F 1/37, H01F 41/02

(54) **Ferrite magnet with salt and manufacturing method of the same**
Ferritmagnet mit Salz und Herstellungsverfahren dafür
Aimant à ferrite avec sel et procédé de fabrication associé

(30) Priority: 12.09.2012 KR 20120101249
(43) Date of publication of application: 19.03.2014
(73) Proprietor: LG Electronics Inc., SEOUL, 07336 (KR); Industry-University Cooperation Foundation Hanyang University ERICA Campus, Gyeonggi-do (KR)
(72) Inventor: Kang, Namseok, Seoul (KR); Kim, Jinbae, Seoul (KR); Chao, Yongho, Gyeonggi-do (KR); Kim, Jongyoul, Gyeonggi-do (KR); An, Gukhwan, Gyeonggi-do (KR); Cho, Sanggeun, Gyeonggi-do (KR)
(74) Representative: Ter Meer Steinmeister & Partner

(56) References cited:
- EP-A1- 2 006 864
- JP-A- H09 306 717
- US-A- 3 527 706
- US-B1- 6 630 084
- KIM ET AL: "Nanosized barium ferrite powders prepared by spray pyrolysis from citric acid solution", CERAMICS INTERNATIONAL, vol. 35, no. 5, 1 July 2009 (2009-07-01), pages 1933-1937, XP026058760, ISSN: 0272-8842, DOI: 10.1016/J.CERAMINT.2008.10.016 [retrieved on 2008-11-17]

## Description

### BACKGROUND

### 1. Field

The following descriptions relates to a ferrite magnet and a manufacturing method thereof.

### 2. Background

Soft ferrite refers to a material in which the speed of magnetization is fast even with a slight magnetic field to suddenly saturate the magnetization of the material and also erasing or inverting residual magnetization can be sufficiently accomplished even with a weak magnetic field, and due to such characteristics it is mostly used for devices for filtering or amplifying signals.

Hard ferrite typically refers to a permanent magnet made of ferrite, which has a lot of applications because a strong magnetic field in an inverse direction is required while not requiring voltage application even when removing or inverting residual magnetization, and a constant magnetic field can be generated while not generating heat in itself.

The application of ferrite are made through molding and sintering, and have been used in the broad fields in the aspect of allowing various shapes and requiring a low cost.

Soft ferrite has been used for deflection yokes (DYs) and fly back transformers (FBTs) which are components for Braun tube to enhance the function of electronic deflection and power supply devices. In recent years, soft ferrite has been mostly used in the fields of IMT related communication cores and electromagnetic interference (EMI) cores for absorbing electromagnetic waves and removing noises in addition to home appliance industries such as flat televisions (TVs), digital televisions (TVs), and the like.

Hard ferrite is mostly applicable to electromechanical energy conversions such as a speaker, a permanent magnet motor, a moving coil type device, a magnetic generator, microphone, and the like, and also used for a storage media, and the like.

In order to apply such a ferrite magnet to various fields, it is important to obtain fine single domain powder having an excellent dispersibility.

There has been an attempt for obtaining fine single crystalline ferrite magnetic powder by adding salt, a technology for adding a large amount of sodium chloride or potassium chloride on the basis of a solid state reaction method to synthesize barium ferrite (Ba-ferrite) has been disclosed in the Korean Patent Registration No. 10-0554500.

The foregoing method may include the processes of mixing a raw material with salt according to the objective material and characteristic to correspond to a stoichiometric ratio so as to synthesize ferrite precursor powder, and performing a heat treatment for crystallization and then removing salt.

According to the foregoing method, it may be possible to produce small particles less than 100 nm, but the cohesion of particles may easily occur due to the characteristics of ferrite magnetic particles during he process of removing salt.

Furthermore, even though fine particles are produced through the above complicated process, it may be impossible to prevent particle growth during he sintering process. The problems due to the manufacturing method may cause an increase of the process cost as well as the deterioration of magnetic characteristics.

Sodium chloride or potassium chloride may be added to try a ferrite magnetic powder synthesis and obtain fine particles, but the molding and sintering processes are carried out subsequent to removing molten salt to form magnets, and thus there still remain problems in that it is difficult to suppress the growth of ferrite magnetic particles, and also the alignment of magnetic nanoparticles required to maximize magnetization cannot be easily achieved.

US 3 527 706 A discloses a ferrite magnet with salt comprising 17% potassium sulfate. EP 2 006 864 A1 discloses a magnet that is based on Sr or Ba ferrites which magnet is calcined. After calcination, salts are removed.

### SUMMARY

A purpose is to provide a ferrite magnet with salt having a high saturated magnetization and coercive force and having a low cohesion between ferrite particles in order to solve the foregoing problems.

Another purpose is to provide a method of manufacturing a ferrite magnet with salt, having advantages in terms of process conditions due to fast synthesis reaction at low temperatures compared to typical magnets, easily obtaining nano-sized particles having high crystallinity, preventing cohesion between particles and particle growth by molten salt, allowing sintering at temperatures lower than typical during the molding and sintering processes for producing a ferrite magnet with salt due to synthesized ferrite magnetic powder with salt thus preventing the deterioration of magnetic characteristics due to particle growth, and allowing alignment in the direction of magnetization easy axis to obtain higher magnetic characteristics.

### BRIEF DESCRIPTION OF THE DRAWINGS

The accompanying drawings, which are included to provide a further understanding and are incorporated in and constitute a part of this specification, illustrate examples.

In the drawings:
FIG. 1 is a schematic diagram illustrating ferrite magnetic powder with salt;
FIG. 2 is a schematic diagram illustrating a process of manufacturing a ferrite magnet with salt;
FIG. 3 is a graph illustrating an X-ray diffraction (XRD) pattern of barium ferrite magnetic powder with sodium chloride synthesized according to Examples 1 through 3;
FIGS. 4 and 5 are scanning electron microscope (SEM) photos of barium ferrite magnetic powder with sodium chloride synthesized according to Example 1;
FIGS. 6 and 7 are scanning electron microscope (SEM) photos of barium ferrite magnetic powder with sodium chloride synthesized according to Example 2;
FIGS. 8 and 9 are scanning electron microscope (SEM) photos of barium ferrite magnetic powder with sodium chloride synthesized according to Example 3;
FIG. 10 is a graph illustrating an X-ray diffraction (XRD) pattern of barium ferrite magnetic powder with potassium chloride synthesized according to Examples 4 through 6;
FIGS. 11 and 12 are scanning electron microscope (SEM) photos of barium ferrite magnetic powder with potassium chloride synthesized according to Example 4;
FIGS. 13 and 14 are scanning electron microscope (SEM) photos of barium ferrite magnetic powder with potassium chloride synthesized according to Example 5;
FIGS. 15 and 16 are scanning electron microscope (SEM) photos of barium ferrite magnetic powder with potassium chloride synthesized according to Example 6;
FIG. 17 is a graph illustrating an X-ray diffraction (XRD) pattern of barium ferrite magnetic powder synthesized according to Comparative Examples 1 through 3;
FIGS. 18 and 19 are scanning electron microscope (SEM) photos of barium ferrite magnetic powder synthesized according to Comparative Example 1;
FIGS. 20 and 21 are scanning electron microscope (SEM) photos of barium ferrite magnetic powder synthesized according to Comparative Example 2;
FIGS. 22 and 23 are scanning electron microscope (SEM) photos of barium ferrite magnetic powder synthesized according to Comparative Example 3;
FIG. 24 is a graph illustrating an X-ray diffraction (XRD) pattern of barium ferrite magnetic powder with sodium chloride synthesized according to Examples 7 through 9;
FIGS. 25 and 26 are scanning electron microscope (SEM) photos of barium ferrite magnetic powder with sodium chloride synthesized according to Example 7;
FIGS. 27 and 28 are scanning electron microscope (SEM) photos of barium ferrite magnetic powder with sodium chloride synthesized according to Example 8;
FIGS. 29 and 30 are scanning electron microscope (SEM) photos of barium ferrite magnetic powder with sodium chloride synthesized according to Example 9;
FIG. 31 is a graph illustrating an X-ray diffraction (XRD) pattern of barium ferrite magnetic powder with potassium chloride synthesized according to Examples 10 through 12;
FIGS. 32 and 33 are scanning electron microscope (SEM) photos of barium ferrite magnetic powder with potassium chloride synthesized according to Example 10;
FIGS. 34 and 35 are scanning electron microscope (SEM) photos of barium ferrite magnetic powder with potassium chloride synthesized according to Example 11;
FIGS. 36 and 37 are scanning electron microscope (SEM) photos of barium ferrite magnetic powder with potassium chloride synthesized according to Example 12;
FIG. 38 is a graph illustrating an X-ray diffraction (XRD) pattern of barium ferrite magnetic powder with sodium chloride synthesized according to Examples 13 and 14;
FIGS. 39 and 40 are scanning electron microscope (SEM) photos of barium ferrite magnetic powder with sodium chloride synthesized according to Example 13;
FIGS. 41 and 42 are scanning electron microscope (SEM) photos of barium ferrite magnetic powder with sodium chloride synthesized according to Example 14;
FIG. 43 is a graph in which magnetic characteristics are evaluated using a vibrating sample magnetometer (VSM) for a barium ferrite magnet with salt produced according to Example 15;
FIG. 44 is an X-ray diffraction graph for a sintered body (barium ferrite magnet with salt) produced according to Example 15;
FIGS. 45 and 46 are scanning electron microscope (SEM) photos illustrating a fracture surface of a sintered body (barium ferrite magnet with salt) produced according to Example 15;
FIG. 47 is a graph in which magnetic characteristics are evaluated using a vibrating sample magnetometer (VSM) for a barium ferrite magnet with salt produced according to Example 16;
FIG. 48 is an X-ray diffraction graph for a sintered body (barium ferrite magnet with salt) produced according to Example 16;
FIGS. 49 and 50 are scanning electron microscope (SEM) photos illustrating a fracture surface of a sintered body (barium ferrite magnet with salt) produced according to Example 16;
FIG. 51 is a graph in which magnetic characteristics are evaluated using a vibrating sample magnetometer (VSM) for a barium ferrite magnet with salt produced according to Example 17;
FIG. 52 is an X-ray diffraction graph for a sintered body (barium ferrite magnet with salt) produced according to Example 17;
FIGS. 53 and 54 are scanning electron microscope (SEM) photos illustrating a fracture surface of a sintered body (barium ferrite magnet with salt) produced according to Example 17;
FIG. 55 is a graph in which magnetic characteristics are evaluated using a vibrating sample magnetometer (VSM) for a barium ferrite magnet with salt produced according to Example 18;
FIG. 56 is an X-ray diffraction graph for a sintered body (barium ferrite magnet with salt) produced according to Example 18;
FIGS. 57 and 58 are scanning electron microscope (SEM) photos illustrating a fracture surface of a sintered body (barium ferrite magnet with salt) produced according to Example 18;
FIG. 59 is a graph in which magnetic characteristics are evaluated using a vibrating sample magnetometer (VSM) for a barium ferrite magnet with salt produced according to Example 19;
FIG. 60 is an X-ray diffraction graph for a sintered body (barium ferrite magnet with salt) produced according to Example 19;
FIGS. 61 and 62 are scanning electron microscope (SEM) photos illustrating a fracture surface of a sintered body (barium ferrite magnet with salt) produced according to Example 19;
FIG. 63 is a graph in which magnetic characteristics are evaluated using a vibrating sample magnetometer (VSM) for a barium ferrite magnet with salt produced according to Example 20;
FIG. 64 is an X-ray diffraction graph for a sintered body (barium ferrite magnet with salt) produced according to Example 20; and
FIGS. 65 and 66 are scanning electron microscope (SEM) photos illustrating a fracture surface of a sintered body (barium ferrite magnet with salt) produced according to Example 20.

### DETAILED DESCRIPTION

The above-identified objectives are solved by the subject matter of claim 1.

The present disclosure also relates to a non-inventive ferrite magnet with salt containing 40 to 99.9 weight % of ferrite and 0.1 to 60 weight % of salt, wherein the salt has a melting point lower than a synthetic temperature of the ferrite, and the salt is melt to form a matrix (melt salt matrix) between the ferrite particles.

The ferrite magnet with salt of the present disclosure may have a structure in which a plurality of ferrites are uniformly dispersed in salt, and the ferrite may be formed of secondary particles, and the second particles may have a form in which a plurality of primary particles having a size smaller than that of the secondary particles are conglomerated along with salt.

The secondary particles of the present disclosure may be formed of spherical particles having a diameter of 0.1 to 20 µm or non-spherical particles having a size of 0.1 to 1000 µm, and the primary particles are formed of a size of 5 to 1000 nm.

The ferrite magnet with salt may have a ratio (Mr/Ms) of residual magnetization (Mr) to saturated magnetization (Ms) greater than 50%.

The salt of the present disclosure may be comprised of at least one or more kinds of salts selected from a chloride metal salt, a nitric acid metal salt, and a sulfuric acid metal salt, and the chloride metal salt may be one or more kinds of salts selected from NaCl, KCl, LiCl, CaCl₂ and MgCl₂, and the nitric acid metal salt may be one or more kinds of salts selected from NaNO₃, KNO₃, LiNO₃, Ca(NO₃)₂ and Mg(NO₃)₂, and the sulfuric acid metal salt may be one or more kinds of salts selected from Na₂SO₄, K₂SO₄, Li₂SO₄, CaSO₄ and MgSO₄.

The ferrite of the present disclosure may be a hexagonal ferrite, and the hexagonal ferrite may have a form of MT₁₂O₁₉, and the M may be comprised of one or more kinds of elements selected from Ba, Sr and La, and the T may be comprised of one or more kinds of elements selected from Fe and Co.

The ferrite of the present disclosure may be a spinel ferrite, and the spinel ferrite may have a form of M₃O₄, and the M may be one or more kinds of elements selected from Fe, Co, Mg, Mn, Zn and Ni.

The invention provides a method of manufacturing a ferrite magnet with salt, and the method includes preparing a source material of the ferrite to be synthesized, preparing a salt having a melting point lower than a synthetic temperature of the ferrite to be synthesized, mixing the source material of the ferrite with the salt, synthesizing ferrite magnetic powder with salt while melting the salt, and molding and sintering the ferrite magnetic powder with salt into a desired form to obtain a ferrite magnet with salt, wherein the ferrite magnet with salt comprises 65 to 99.9 weight % of ferrite and 0.1 to 35 weight % of salt, and the salt is melt to form a matrix between the ferrite particles.

The salt of the present disclosure may preferably use a salt having a melting point lower than the temperature of synthesizing the ferrite magnetic powder with salt, and the sintering may be preferably carried out in a temperature condition of melting the salt or a temperature and pressure condition of melting the salt.

The ferrite magnet with salt of the present disclosure may have a structure in which a plurality of ferrites are uniformly dispersed in salt, and the ferrite may be formed of secondary particles, and the second particles may have a form in which a plurality of primary particles having a size smaller than that of the secondary particles are conglomerated along with salt.

The secondary particles of the present disclosure may be formed of spherical particles having a diameter of 0.1 to 20 µm or non-spherical particles having a size of 0.1 to 1000 µm, and the primary particles may be formed of a size of 5 to 1000 nm.

The ferrite magnet with salt of the present disclosure may have a ratio (Mr/Ms) of residual magnetization (Mr) to saturated magnetization (Ms) greater than 50%.

The salt of the present disclosure may be comprised of at least one or more kinds of salts selected from a chloride metal salt, a nitric acid metal salt, and a sulfuric acid metal salt, and the chloride metal salt may be one or more kinds of salts selected from NaCl, KCl, LiCl, CaCl2 and MgCl2, and the nitric acid metal salt may be one or more kinds of salts selected from NaNO3, KNO3, LiNO3, Ca(NO3)2 and Mg(NO3)2, and the sulfuric acid metal salt may be one or more kinds of salts selected from Na2SO4, K2SO4, Li2SO4, CaSO4 and MgSO4.

The source material of the ferrite of the present disclosure may be comprised of one or more kinds of materials selected from Ba(NOs)₂, BaCO₃, BaCl₂, BaSO₄, BaO₂, Sr(NO₃)₂, SrCO₃, SrCl₂, SrSO₄, Sr(OH)₂ La(NO₃)₃, LaCl₃ La₂(SO₄)₃ and La(OH)₃ and one or more kinds of materials selected from Fe(NO₃)₃, FeCO₃, FeCl₃, Fe₂O₃, FeCl₂, Fe(OH)₃, CO(NO₃)₂, CoCO₃, CoCl₂ and CoSO₄, and the ferrite may be a hexagonal ferrite, and the hexagonal ferrite may have a form of MT₁₂O₁₉, and the M may be comprised of one or more kinds of elements selected from Ba, Sr and La, and the T may be comprised of one or more kinds of elements selected from Fe and Co.

The source material of the ferrite of the present disclosure may be comprised of one or more kinds of materials selected from Fe(NO₃)₃, FeCO₃, FeCl₃, Fe₂O₃, FeCl₂, Fe(OH)₃, Co(NO₃)₂, CoCO₃, CoCl₂, CoSO₄, Mn(NO₃)₂, MnCO₃, MnCl₂, MnSO₄, MnO₂, Mg(NO₃)₂, MgCO₃, MgCl₂, MgSO₄, Ni(NO₃)₂, NiCO₃, NiCl₂, NiSO₄, Zn(NO₃)₂, ZnCl₂, ZnSO₄ and ZnO, and the ferrite may be a spinel ferrite, and the spinel ferrite may have a form of M₃O₄, and the M may be one or more kinds of elements selected from Fe, Co, Mg, Mn, Zn and Ni.

The source material of the ferrite of the present disclosure may be comprised of one or more kinds of materials selected from Ba(NO₃)₂, BaCO₃, BaCl₂, BaSO₄, BaO₂, Sr(NO₃)₂, SrCO₃, SrCl₂, SrSO₄, Sr(OH)₂ La(NO₃)₃, LaCl₃ La₂(SO₄)₃ and La(OH)₃ and one or more kinds of materials selected from Fe(NO₃)₃, FeCO₃, FeCl₃, Fe₂O₃, FeCl₂, Fe(OH)₃, CO(NO₃)₂, CoCO₃, CoCl₂ and CoSO₄, and said synthesizing the ferrite magnetic powder with salt may include supplying power to a heating means surrounding the circumference of a reaction chamber in a spray pyrolysis apparatus and heating the reaction chamber to maintain a temperature higher than the melting point of the salt in a consistent manner, supplying a carrier gas to a sprayer containing a mixture of the source material of the ferrite and the salt, vibrating the mixture contained in the sprayer by an ultrasonic transducer to generate liquid droplets in the sprayer, and introducing the liquid droplets into the reaction chamber by the carrier gas and allowing the liquid droplets introduced into the reaction chamber to be subjected to the pyrolysis and oxidation reaction to synthesize ferrite magnetic powder with salt.

The present disclosure provides a method of manufacturing a ferrite magnet with salt, having advantages in terms of process conditions due to fast synthesis reaction at low temperatures compared to typical magnets, easily obtaining nano-sized particles having high crystallinity, preventing cohesion between particles and particle growth by molten salt, allowing sintering at temperatures lower than typical during the molding and sintering processes for producing a ferrite magnet with salt due to synthesized ferrite magnetic powder with salt thus preventing the deterioration of magnetic characteristics due to particle growth, and allowing alignment in the direction of magnetization easy axis to obtain higher magnetic characteristics.

It may have advantages in that the synthesis of ferrite magnetic powder is carried out within a melting point to apply a liquid phase sintering mechanism, and the diffusion speed of particles is far superior to the synthesis in a typical solid phase to further expedite the speed of synthesis, and high crystalline power can be obtained at lower temperatures as well as cohesion between magnetic particles can be prevented within a melting point.

Furthermore, the alignment of magnetic particles may be induced during the sintering process due to the security of fluidity by residual salt, thus exhibiting higher magnetic characteristics.

Furthermore, there exists a disadvantage that the existing sintering process is carried out at temperatures higher than those at which the particle growth of ferrites occurs, thereby affecting the magnetic characteristics. However, there is an advantage that sintering is possible at temperatures at which the particle growth of ferrites does not occur (for instance, at the salt melting temperature or temperatures higher than that), thereby not affecting the magnetic characteristics of a ferrite magnet.

A ferrite magnet with salt of the present disclosure may be applicable to all types of electronic devices and components that use soft or hard ferrite magnets.

Hereinafter, exemplary preferred embodiments will be described in detail with reference to the accompanying drawings. A non-inventive ferrite magnet with salt of the present disclosure may contain 40 to 99.9 weight % of ferrite and 0.1 to 60 weight % of salt, wherein the salt has a melting point lower than a synthetic temperature of the ferrite, and the salt is melt to form a matrix between the ferrite particles. It is preferable that a ferrite magnet with salt contains 40 to 99.9 weight %, more preferably 65 to 99.9 weight % of the ferrite, and contains 0.1 to 60 weight %, more preferably 0.1 to 35 weight % of the salt.

The ferrite magnet with salt of the present disclosure may have a structure in which a plurality of ferrites are uniformly dispersed in salt, and the ferrite may be formed of secondary particles, and the second particles may have a form in which a plurality of primary particles having a size smaller than that of the secondary particles are conglomerated along with salt.

The secondary particles of the present disclosure may be formed of spherical particles having a diameter of 0.1 to 20 µm, and the primary particles are formed of a size of 5 to 1000 nm. The secondary particles may be formed of non-spherical particles having a size of 0.1 to 1000 µm. The primary particles may be formed of hexagonal plate shaped or rod shaped particles.

The ferrite magnet with salt of the present disclosure has a ratio (Mr/Ms) of residual magnetization (Mr) to saturated magnetization (Ms) greater than 50%. The Mr/Ms value of the present disclosure may be greater than 50%, for example, greater than 50% but less than 99.9%.

The salt of the present disclosure may be comprised of at least one or more kinds of salts selected from a chloride metal salt, a nitric acid metal salt, and a sulfuric acid metal salt, and the chloride metal salt may be one or more kinds of salts selected from NaCl, KCl, LiCl, CaCl₂ and MgCl₂, and the nitric acid metal salt may be one or more kinds of salts selected from NaNO₃, KNO₃, LiNO₃, Ca(NO₃)₂ and Mg(NO₃)₂, and the sulfuric acid metal salt may be one or more kinds of salts selected from Na₂SO₄, K₂SO₄, Li₂SO₄, CaSO₄ and MgSO₄.

The ferrite of the present disclosure may be a hexagonal ferrite, and the hexagonal ferrite may have a form of MT₁₂O₁₉, and the M may be comprised of one or more kinds of elements selected from Ba, Sr and La, and the T may be comprised of one or more kinds of elements selected from Fe and Co.

The ferrite of the present disclosure may be a spinel ferrite, and the spinel ferrite may have a form of M304, and the M may be one or more kinds of elements selected from Fe, Co, Mg, Mn, Zn and Ni.

A method of manufacturing a ferrite magnet with salt of the present disclosure includes preparing a source material of the ferrite to be synthesized, preparing a salt having a melting point lower than a synthetic temperature of the ferrite to be synthesized, mixing the source material of the ferrite with the salt, synthesizing ferrite magnetic powder with salt while melting the salt, and molding and sintering the ferrite magnetic powder with salt into a desired form to obtain a ferrite magnet with salt, wherein the ferrite magnet with salt contains 65 to 99.9 weight % of ferrite and 0.1 to 35 weight % of salt, and the salt is melt to form a matrix between the ferrite particles.

Hereinafter, a synthetic temperature of the ferrite is used to denote a temperature of synthesizing ferrite magnetic powder. Various methods such as spray pyrolysis method may be used for the synthesis of ferrite magnetic powder, and for example, the synthetic temperature of the ferrite in case of using the spray pyrolysis method is a temperature at which liquid droplets are passed through a reaction chamber to synthesize ferrite magnetic powder, denoting the highest temperature between the inlet and outlet temperatures of the reaction chamber.

The salt of the present disclosure may preferably use a salt having a melting point lower than the temperature of synthesizing the ferrite magnetic powder with salt, and the sintering according to the present disclosure may be preferably carried out in a temperature condition of melting the salt or a temperature and pressure condition of melting the salt. The sintering may be preferably carried out at temperatures higher than the melting point (800 °C in case of NaCl, 776 °C in case of KCI) of the salt when it is not pressurized during the sintering, and the melting of salt can be carried out even at temperatures lower than the melting point of the salt when it is pressurized during the sintering. The pressurization during the sintering may be preferably carried out in the range of 20 to 200 MPa.

The salt of the present disclosure may be comprised of at least one or more kinds of salts selected from a chloride metal salt, a nitric acid metal salt, and a sulfuric acid metal salt, and the chloride metal salt may be one or more kinds of salts selected from NaCl, KCl, LiCl, CaCl₂ and MgCl₂, and the nitric acid metal salt may be one or more kinds of salts selected from NaNO₃, KNO₃, LiNO₃, Ca(NO₃)₂ and Mg(NO₃)₂, and the sulfuric acid metal salt may be one or more kinds of salts selected from Na₂SO₄, K₂SO₄, Li₂SO₄, CaSO₄ and MgSO₄.

The salt that can exist in a liquid state at a sintering condition (sintering temperature and pressure) of ferrite along with a source material of ferrite of the present disclosure may be added to induce that a ferrite magnet can be synthesized in liquefied salt during the sintering, and molten salt may be used as it is without washing prior to sintering.

It may have advantages in that the synthesis of ferrite magnetic powder is carried out within a melting point to apply a liquid phase sintering mechanism, and the diffusion speed of particles is far superior to the synthesis in a typical solid phase to further expedite the speed of synthesis, and high crystalline power can be obtained at lower temperatures as well as cohesion between magnetic particles can be prevented within a melting point.

Furthermore, the alignment of magnetic particles may be induced during the sintering process due to the security of fluidity by residual salt, thus exhibiting higher magnetic characteristics.

Furthermore, there exists a disadvantage that the existing sintering process is carried out at temperatures higher than those at which the particle growth of ferrites occurs, thereby affecting the magnetic characteristics. However, there is an advantage that sintering is possible at temperatures at which the particle growth of ferrites does not occur (for instance, at the salt melting temperature or temperatures higher than that), thereby not affecting the magnetic characteristics of a ferrite magnet.

The ferrite magnetic powder with salt is synthesized and then the ferrite magnetic powder with salt is molded and sintered as it is without washing and removing the salt to synthesize a ferrite magnet with salt and molten salt is used as it is for the magnet.

Methods that can be used to obtain ferrite magnetic powder of the present disclosure may include a solid state reaction method, a coprecipitation method, a sol-gel method, a glass crystallization method, a hydrothermal method, and an aerosol method.

The solid state reaction method is a method of mixing and pulverizing a starting material along with deionized water at a molar ratio of metal ions and then performing a drying process and then performing a pulverization process again and performing a sintering process to obtain powder.

The coprecipitation method is a method of dissolving a starting material in deionized water at a composition ratio of metal ions to obtain a mixture, and then precipitating the mixture with a precipitant and then repeating the cleaning process, and making a pH adjustment and then performing a filtration and drying process and performing a sintering process to obtain powder.

The sol-gel method is a method of dissolving a starting material in a solvent and then adding an additive to make a sol state solution, and obtaining a powder sample through drying and then performing a sintering process to obtain powder.

The glass crystallization method is a method of mixing a starting material according to a composition ratio of metal ions and then melting the mixture at high temperatures and putting the molten mixture into water to rapidly cool it down to obtain an amorphous material, and sintering the amorphous material for pulverization and then dissolving vitreous components and surplus elements and then performing a sintering process to obtain powder.

The hydrothermal method is a method of placing a starting material into an autoclave to be reacted under temperature and pressure to obtain powder.

The aerosol method is a method of converting a starting material into a gaseous form and producing powder by burning or calcination while passing through a tube furnace.

The manufacture of a ferrite magnet with salt can use various conventional methods for synthesizing ferrite magnetic powder as they are, and thus the selection of the method can be made according to the objective and the characteristics of materials, and the synthesis can be performed without being limited to the kind of ferrite.

For example, the source material of the ferrite of the present disclosure may be comprised of one or more kinds of materials selected from Ba(NOs)₂, BaCO₃,BaCl₂, BaSO₄, BaO₂, Sr(NO₃)₂, SrCO₃, SrCl₂, SrSO₄, Sr(OH)₂ La(NO₃)₃, LaCl₃ La₂(SO₄)₃ and La(OH)₃ and one or more kinds of materials selected from Fe(NO₃)₃,FeCO₃, FeCl₃, Fe₂O₃, FeCl₂, Fe(OH)₃, Co(NO₃)₂, CoCO₃, CoCl₂ and CoSO₄, and the ferrite may be a hexagonal ferrite, and the hexagonal ferrite may have a form of MT₁₂O₁₉, and the M may be comprised of one or more kinds of elements selected from Ba, Sr and La, and the T may be comprised of one or more kinds of elements selected from Fe and Co.

Furthermore, the source material of the ferrite of the present disclosure may be comprised of one or more kinds of materials selected from Fe(NO₃)₃, FeCO₃, FeCl₃, Fe₂O₃, FeCl₂, Fe(OH)₃, CO(NO₃)₂, CoCO₃, CoCl₂, CoSO₄, Mn(NO₃)₂, MnCO₃, MnCl₂, MnSO₄, MnO₂, Mg(NO₃)₂, MgCO₃, MgCl₂, MgSO₄, Ni(NO₃)₂, NiCO₃, NiCl₂, NiSO₄, Zn(NO₃)₂, ZnCl₂, ZnSO₄ and ZnO, and the ferrite of the present disclosure may be a spinel ferrite, and the spinel ferrite may have a form of M₃O₄, and the M may be one or more kinds of elements selected from Fe, Co, Mg, Mn, Zn and Ni.

The method of sintering ferrite magnetic powder with salt of the present disclosure may include normal sintering, hot pressing, hot isostatic pressing (HIP), gas pressure sintering (GPS), spark plasma sintering (SPS), and the like, and the selection of the method can be made according to the objective and the characteristics of materials, and the sintering can be performed without being limited to the kind of ferrite.

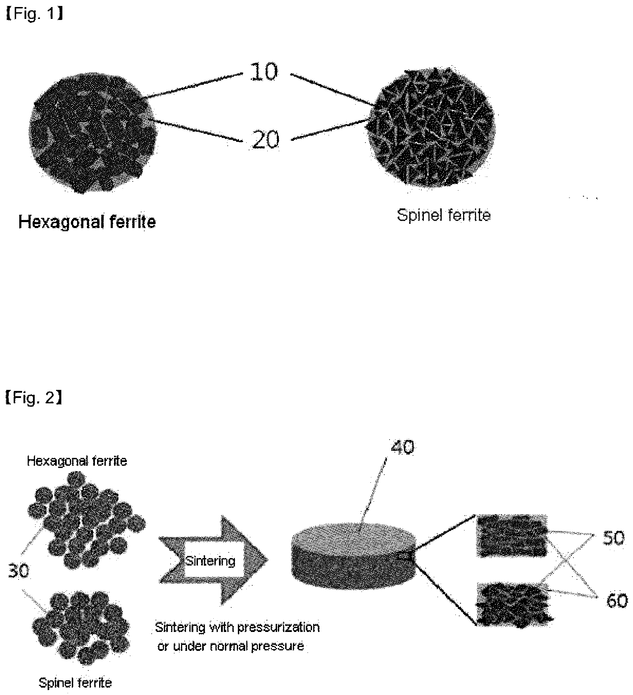

FIG. 1 is a schematic diagram illustrating ferrite magnetic powder with salt. In FIG. 1, reference numeral "10" represents primary ferrite magnetic particles, reference numeral "20" represents molten salt, and the ferrite magnetic powder with salt is made in the form of a composite powder in which ferrite magnetic particles are distributed on a matrix formed of molten salt without being cohered between particles.

The form of magnetic powder with salt of the present disclosure may be used as it is to produce a ferrite magnet with salt. When it is under pressure and temperature condition above the melting point of salt while sintering powder, fluidity due to the melting of residual salt may be increased, thereby inducing an alignment between magnetic particles as well as enhancing the molding density. The alignment of magnetic particles may increase the residual magnetic induction (Br) and coercive force (Hc), thereby enhancing the entire magnetic characteristics.

The source material of the ferrite of the present disclosure may be comprised of one or more kinds of materials selected from Ba(NO₃)₂, BaCO₃, BaCl₂, BaSO₄, BaO₂, Sr(NO₃)₂, SrCO₃, SrCl₂, SrSO₄, Sr(OH)₂ La(NO₃)₃, LaCl₃ La₂(SO₄)₃ and La(OH)₃ and one or more kinds of materials selected from Fe(NO₃)₃, FeCO₃, FeCl₃, Fe₂O₃, FeCl₂, Fe(OH)₃, CO(NO₃)₂, CoCO₃, CoCl₂ and CoSO₄, and said synthesizing the ferrite magnetic powder with salt according to the present disclosure may include supplying power to a heating means surrounding the circumference of a reaction chamber in a spray pyrolysis apparatus and heating the reaction chamber to maintain a temperature higher than the melting point of the salt in a consistent manner, supplying a carrier gas to a sprayer containing a mixture of the source material of the ferrite and the salt, vibrating the mixture contained in the sprayer by an ultrasonic transducer to generate liquid droplets in the sprayer, and introducing the liquid droplets into the reaction chamber by the carrier gas and allowing the liquid droplets introduced into the reaction chamber to be subjected to the pyrolysis and oxidation reaction to synthesize ferrite magnetic powder with salt.

FIG. 2 is a mimetic diagram illustrating a process of manufacturing a ferrite magnet with salt. In FIG. 2, reference numeral "30" represents ferrite magnetic powder with salt prior to molding, and reference numeral "40" represents a sintered body subsequent to molding and sintering, and a figure at the most left side in FIG. 2 is a drawing illustrating an enlarged minute structure of the sintered body in which reference numerals "50" and "60" represent ferrite magnetic particles and molten salt, respectively. The sintered body illustrates that ferrite magnetic particles are arranged on a molten salt matrix.

The ferrite magnet with salt of the present disclosure may have a structure in which a plurality of ferrites are uniformly dispersed in salt, and the ferrite may be formed of secondary particles, and the second particles may have a form in which a plurality of primary particles having a size smaller than that of the secondary particles are conglomerated along with salt. The secondary particles of the present disclosure may be formed of spherical particles having a diameter of 0.1 to 20 µm, and the primary particles are formed of a size of 5 to 1000 nm. The secondary particles may be formed of non-spherical particles having a size of 0.1 to 1000 µm. The primary particles of the present disclosure may be formed of hexagonal plate shaped or rod shaped particles. The ferrite magnet with salt has a ratio (Mr/Ms) of residual magnetization (Mr) to saturated magnetization (Ms) greater than 50%. The Mr/Ms value may be greater than 50%, for example, greater than 50% but less than 99.9%.

Hereinafter, a case of using a spray pyrolysis method which sprays a liquid precursor among aerosol methods to produce a ferrite magnet with salt is taken as an example, but a method of manufacturing a ferrite magnet with salt may not be necessarily limited to this.

The spray pyrolysis method can synthesize particles at once without using a complicated post thermal treatment within a short period of time, but may cause a problem in which primary particles formed in sprayed liquid droplets are strongly cohered in the form of secondary particles. However, salt may be additionally added, other than the source material of ferrite, thereby preventing cohesion between primary particles and obtaining secondary particles in the form of high crystalline particles being mixed with molten salt.

The barium ferrite (BaFe-₁₂O₁₉), which is one of ferrite magnets, was produced as an example, and sodium chloride (NaCl) or potassium chloride (KCl) was used for the additionally added salt.

The ferrite magnet of the present disclosure may not be necessarily limited to barium ferrite, and also may be spinel ferrite or hexagonal ferrite, and arbitrarily selected for the purpose.

Spinel ferrite has a basic form of M₃O₄, and a kind of element such as Fe, Co, Mg, Mn, Zn, Ni, and the like may be placed or two or more kinds of composite elements thereof may be placed into the site of M. The spinel ferrite may include cobalt ferrite (Co ferrite), nickel ferrite (Ni ferrite), manganese ferrite (Mn ferrite), magnesium ferrite (Mg ferrite), zinc ferrite (Zn ferrite), manganese zinc ferrite (MnZn ferrite), nickel zinc ferrite (NiZn ferrite), and the like.

Spinel ferrite has a form of MT₁₂O₁₉, and a kind of element such as Ba, Sr, La, and the like may be placed or two or more kinds of composite elements thereof may be placed into the site of M. A kind of element such as Fe, Co, and the like may be placed or two or more kinds of composite elements thereof may be placed into the site of T. The hexagonal ferrite may include barium ferrite (Ba ferrite), strontium ferrite (Sr ferrite), lanthanum ferrite (La ferrite), barium strontium ferrite (BaSr ferrite), barium lanthanum ferrite (BaLa ferrite), strontium lanthanum ferrite (SrLa ferrite), and the like.

A raw material appropriate to each metal element may be used according to the type of ferrite. For source materials of ferrite, the source raw material of barium may be Ba(NO₃)₂, BaCO₃,BaCl₂, BaSO₄ or BaO₂, and the source raw material of strontium may be Sr(NO₃)₂, SrCO₃, SrCl₂, SrSO₄ or Sr(OH)₂, and the source raw material of lanthanum may be La(NO₃)₃, LaCl₃ La₂(SO₄)₃ or La(OH)₃, and the source raw material of iron may be Fe(NO₃)₃, FeCO₃, FeCl₃, Fe₂O₃, FeCl₂ or Fe(OH)₃, and the source raw material of cobalt may be Co(NO₃)₂, CoCO₃, CoCl₂ or CoSO₄, and the source raw material of manganese may be Mn(NO₃)₂, MnCO₃, MnCl₂, MnSO₄ or MnO₂, and the source raw material of magnesium may be Mg(NO₃)₂, MgCO₃, MgCl₂ or MgSO₄, and the source raw material of nickel may be Ni(NO₃)₂, NiCO₃, NiCl₂ or NiSO₄, and the source raw material of zinc may be Zn(NO₃)₂, ZnCl₂, ZnSO₄ or ZnO.

The salt of the present disclosure may be chloride metal salt (NaCl, KCl, LiCl, CaCl₂, MgCl₂, etc.), nitric acid metal salt (NaNO₃, KNO₃, LiNO₃, Ca(NO₃)₂, Mg(NO₃)₂, etc.) or sulfuric acid metal salt (Na₂SO₄, K₂SO₄, Li₂SO₄, CaSO₄, MgSO₄, etc.), or may be formed in the form of a single or mixed salt, or salt that can exist in a molten state at a sintering temperature may be arbitrarily selected.

The spark plasma sintering (hereinafter, referred to as "SPS") was used to perform a sintering process subsequent to molding synthesized ferrite magnetic powder with salt. The SPS may allow instantaneous heating and cooling using spark plasma with an electro-pressure method using DC pulses among vacuum hot pressings, thereby having an advantage of minimizing the effect on the created crystalline phase.

Hereinafter, exemplary embodiments will be described in detail.

### Examples

### <Example 1>

Ba(NO₃)₂ and Fe(NO₃)₃ · 9H₂O were used for a source material of barium ferrite. A mixture in which Ba(NO₃)₂ and Fe(NO₃)₃ · 9H₂O are mixed in a molar ratio of 1:12 was used for the source material of barium ferrite. Specifically, Ba(NO₃)₂ and Fe(NO₃)₃ · 9H₂O were added to deionized water and stirred for about an hour to prepare a source material of barium ferrite comprised of Ba(NO₃)₂ with a molar concentration of 0.05M and Fe(NO₃)₃ · 9H₂O with a molar concentration of 0.6M.

Sodium chloride (NaCl) was added to the source material of barium ferrite to prepare a starting material. The sodium chloride was weighed to have a weight ratio of 19 % with respect to ferrite magnetic powder with salt (19 weight % with respect to 100 weight % of ferrite magnetic powder with salt) and added.

The starting material was sprayed to form liquid droplets and allowed to pass through a reaction chamber heated at an inlet temperature of about 400 °C, and an outlet temperature of about 850 °C along with a carrier gas (O₂), thereby synthesizing barium ferrite magnetic powder with salt.

Hereinafter, a method of forming barium ferrite magnetic powder with salt using a spray pyrolysis method will be described in more detail.

Power was supplied to a heating means surrounding the circumference of a reaction chamber in a spray pyrolysis apparatus to heat the reaction chamber so as to maintain an inlet temperature of about 400 °C, and an outlet temperature of 850 °C.

A carrier gas was supplied to a sprayer containing the starting material. Oxygen gas (O₂) was used for the carrier gas. The supply flow rate of the carrier gas was set to about 1.5 l/min.

The starting material contained in the sprayer was vibrated by an ultrasonic transducer to generate liquid droplets in the sprayer, and the liquid droplets were introduced into the reaction chamber by the carrier gas and subjected to the pyrolysis and oxidation reaction to synthesize barium ferrite magnetic powder with sodium chloride. The barium ferrite magnetic powder with sodium chloride formed through the pyrolysis and oxidation reaction was collected by the collector made of a paper filter.

### <Example 2>

A starting material was prepared using a source material of barium ferrite and sodium chloride similarly to the Example 1, but sodium chloride was weighed to have a weight ratio of 31% with respect to ferrite magnetic powder with salt (31 weight % with respect to 100 weight % of ferrite magnetic powder with salt) and added.

The starting material was sprayed to form liquid droplets and allowed to pass through a reaction chamber heated at an inlet temperature of about 400 °C, and an outlet temperature of about 850 °C along with a carrier gas (O₂) similarly to the Example 1, thereby synthesizing barium ferrite magnetic powder with salt.

### <Example 3> not belonging to the invention

A starting material was prepared using a source material of barium ferrite and sodium chloride similarly to the Example 1, but sodium chloride was weighed to have a weight ratio of 53% with respect to ferrite magnetic powder with salt (53 weight % with respect to 100 weight % of ferrite magnetic powder with salt) and added.

The starting material was sprayed to form liquid droplets and allowed to pass through a reaction chamber heated at an inlet temperature of about 400 °C, and an outlet temperature of about 850 °C along with a carrier gas (O₂) similarly to the Example 1, thereby synthesizing barium ferrite magnetic powder with salt.

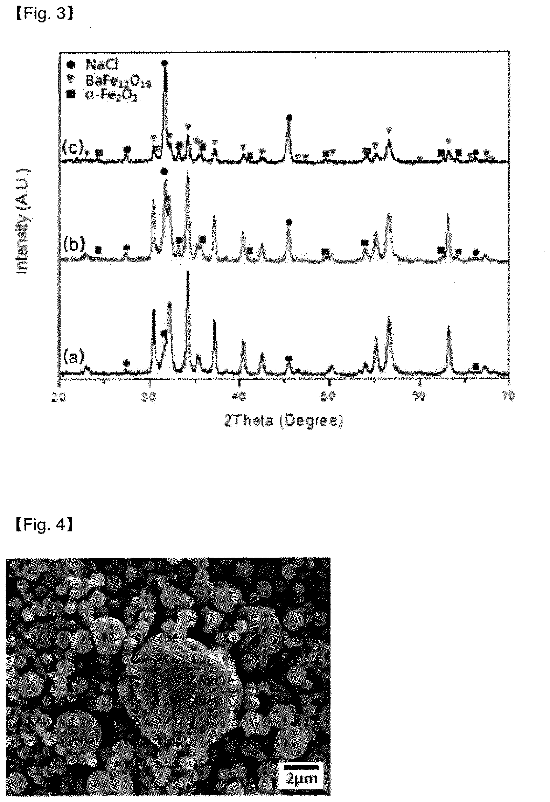

FIG. 3 is a graph illustrating an X-ray diffraction (XRD) pattern of barium ferrite magnetic powder with sodium chloride synthesized according to Examples 1 through 3. FIG. 3A illustrates an X-ray diffraction (XRD) pattern of barium ferrite magnetic powder with sodium chloride synthesized according to Example 1, and FIG. 3B illustrates an X-ray diffraction (XRD) pattern of barium ferrite magnetic powder with sodium chloride synthesized according to Example 2, and FIG. 3C illustrates an X-ray diffraction (XRD) pattern of barium ferrite magnetic powder with sodium chloride synthesized according to Example 3.

Referring to FIG. 3, sodium chloride (NaCI) and barium ferrite (BaFe₁₂O₁₉) crystalline phases were shown in all Examples 1 through 3, and hematite (α-Fe₂O₃) crystalline phases were shown in both Examples 2 and 3. It is shown that the peak of sodium chloride is increased in proportion to the added amount of sodium chloride. Furthermore, when an excessive amount of sodium chloride was added (in case of Examples 2 and 3), hematite (α-Fe₂O₃) phases were shown, thus indicating that it corresponds to an intermediate phase in the creation of barium ferrite and reaction was not completely carried out. When an excessive amount of sodium chloride is contained, a diffusion path between barium ferrite precursor particles in a molten sodium chloride matrix is lengthened and thus it takes a long reaction time, thereby causing the foregoing results.

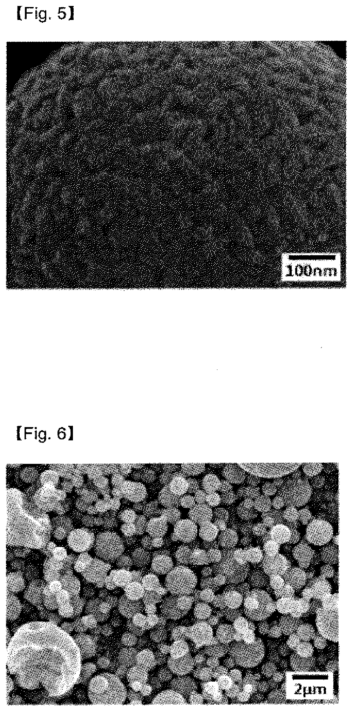

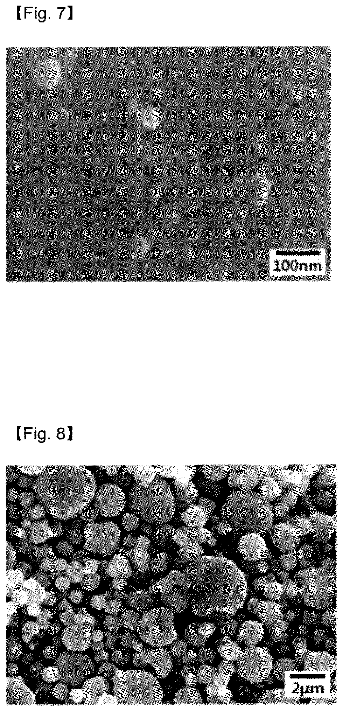

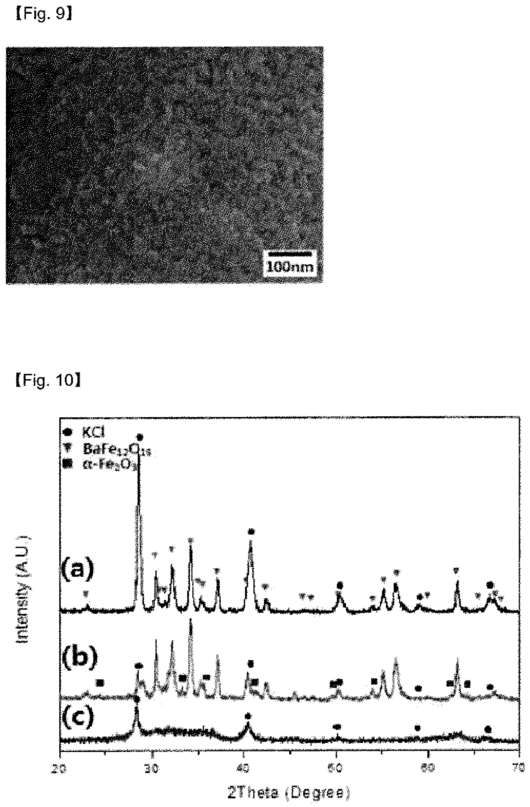

FIGS. 4 and 5 are scanning electron microscope (SEM) photos of barium ferrite magnetic powder with sodium chloride synthesized according to Example 1, and FIGS. 6 and 7 are scanning electron microscope (SEM) photos of barium ferrite magnetic powder with sodium chloride synthesized according to Example 2, and FIGS. 8 and 9 are scanning electron microscope (SEM) photos of barium ferrite magnetic powder with sodium chloride synthesized according to Example 3.

Referring to FIGS. 4 through 9, it is seen that barium ferrite with sodium chloride was well formed, and the formed barium ferrite particles with sodium chloride exhibited a primary particle size of less than 100 nm and a secondary particle size cohered to the primary particles was less than 5 µm. As illustrated in FIGS. 5, 7 and 9, there is shown a tendency that the size of primary particles decreases as increasing the content of sodium chloride in the enlarged photos.

### <Example 4>

Ba(NO₃)₂ and Fe(NO₃)₃ · 9H₂O were used for a source material of barium ferrite. A mixture in which Ba(NO₃)₂ and Fe(NO₃)₃ · 9H₂O are mixed in a molar ratio of 1:12 was used for the source material of barium ferrite. Specifically, Ba(NO₃)₂ and Fe(NO₃)₃ · 9H₂O were added to deionized water and stirred for about an hour to prepare a source material of barium ferrite comprised of Ba(NO₃)₂ with a molar concentration of 0.05M and Fe(NO₃)₃ · 9H₂O with a molar concentration of 0.6M.

Potassium chloride (KCl) was added to the source material of barium ferrite to prepare a starting material. The potassium chloride was weighed to have a weight ratio of 19% with respect to potassium chloride ferrite magnetic powder (19 weight % with respect to 100 weight % of potassium chloride ferrite magnetic powder) and added.

The starting material was sprayed to form liquid droplets and allowed to pass through a reaction chamber heated at an inlet temperature of about 400 °C, and an outlet temperature of about 850 °C along with a carrier gas (O₂), thereby synthesizing potassium chloride barium ferrite magnetic powder.

Hereinafter, a method of forming potassium chloride barium ferrite magnetic powder using a spray pyrolysis method will be described in more detail.

Power was supplied to a heating means surrounding the circumference of a reaction chamber in a spray pyrolysis apparatus to heat the reaction chamber so as to maintain an inlet temperature of about 400 °C, and an outlet temperature of 850 °C.

A carrier gas was supplied to a sprayer containing the starting material. Oxygen gas (O₂) was used for the carrier gas. The supply flow rate of the carrier gas was set to about 1.5 l/min.

The starting material contained in the sprayer was vibrated by an ultrasonic transducer to generate liquid droplets in the sprayer, and the liquid droplets were introduced into the reaction chamber by the carrier gas and subjected to the pyrolysis and oxidation reaction to synthesize potassium chloride barium ferrite magnetic powder. The potassium chloride barium ferrite magnetic powder formed through the pyrolysis and oxidation reaction was collected by the collector made of a paper filter.

### <Example 5>

A starting material was prepared using a source material of barium ferrite and sodium chloride similarly to the Example 4, but potassium chloride was weighed to have a weight ratio of 31% with respect to potassium chloride ferrite magnetic powder (31 weight % with respect to 100 weight % of potassium chloride ferrite magnetic powder) and added.

The starting material was sprayed to form liquid droplets and allowed to pass through a reaction chamber heated at an inlet temperature of about 400 °C, and an outlet temperature of about 850 °C along with a carrier gas (O₂) similarly to the Example 4, thereby synthesizing potassium chloride barium ferrite magnetic powder.

### <Example 6> not belonging to the invention

A starting material was prepared using a source material of barium ferrite and potassium chloride similarly to the Example 4, but potassium chloride was weighed to have a weight ratio of 53% with respect to potassium chloride ferrite magnetic powder (53 weight % with respect to 100 weight % of potassium chloride ferrite magnetic powder) and added.

The starting material was sprayed to form liquid droplets and allowed to pass through a reaction chamber heated at an inlet temperature of about 400 °C, and an outlet temperature of about 850 °C along with a carrier gas (O₂) similarly to the Example 4, thereby synthesizing potassium chloride barium ferrite magnetic powder.

FIG. 10 is a graph illustrating an X-ray diffraction (XRD) pattern of barium ferrite magnetic powder with potassium chloride synthesized according to Examples 4 through 6. FIG. 10A illustrates an X-ray diffraction (XRD) pattern of barium ferrite magnetic powder with potassium chloride synthesized according to Example 4, and FIG. 10B illustrates an X-ray diffraction (XRD) pattern of barium ferrite magnetic powder with potassium chloride synthesized according to Example 5, and FIG. 10C illustrates an X-ray diffraction (XRD) pattern of barium ferrite magnetic powder with potassium chloride synthesized according to Example 6.

Referring to FIG. 10, potassium chloride (KCl) and barium ferrite (BaFe₁₂O₁₉) crystalline phases were shown in all Examples 4 through 6, and hematite (α-Fe₂O₃) crystalline phases were shown in case of Example 5. It is shown that the peak of sodium chloride is increased as increasing the added amount of salt. However, barium ferrite phases were not observed in Example 4 with a small added amount of salt.

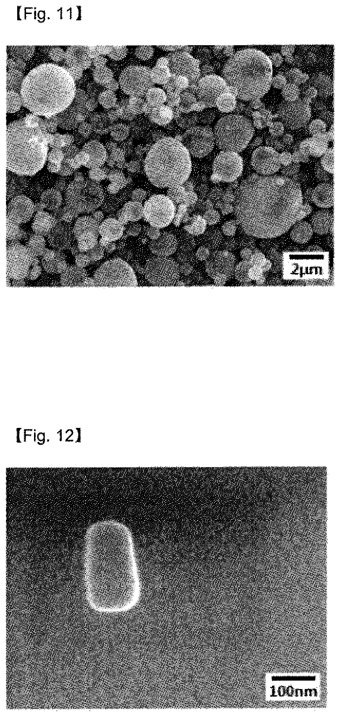

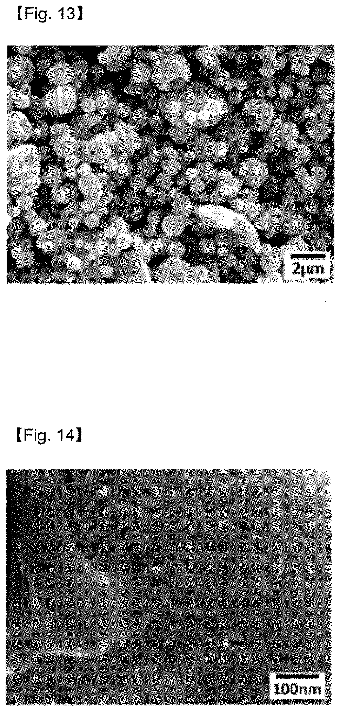

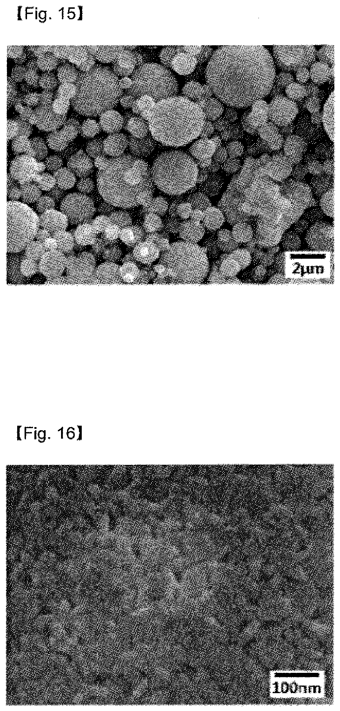

FIGS. 11 and 12 are scanning electron microscope (SEM) photos of barium ferrite magnetic powder with potassium chloride synthesized according to Example 4, and FIGS. 13 and 14 are scanning electron microscope (SEM) photos of barium ferrite magnetic powder with potassium chloride synthesized according to Example 5, and FIGS. 15 and 16 are scanning electron microscope (SEM) photos of barium ferrite magnetic powder with potassium chloride synthesized according to Example 6.

Referring to FIGS. 11 through 16, it is seen that barium ferrite with potassium chloride was well formed, and the formed barium ferrite particles with potassium chloride exhibited a primary particle size of less than 100 nm and a secondary particle size cohered to the primary particles was less than 5 µm. In a high magnification photo of FIG. 12, it is shown that particles were very small, and thus it is estimated that they were amorphous particles in a state prior to creating a barium ferrite phase when the X-ray diffraction results are taken into consideration in a comprehensive manner. When taking the results into consideration, it is seen that barium ferrite phases were not formed when potassium chloride was added at a concentration of 19% with respect to barium ferrite magnetic powder with potassium chloride at a synthetic temperature of 850 °C.

Comparative Examples that can be compared with Examples will be disclosed to easily understand the characteristics of the above Examples 1 through 6. The following Comparative Examples 1 through 3 are disclosed herein to simply compare them with the characteristics of the Examples, and it is apparent that they are not the prior art of the present invention.

### <Comparative Example 1>

Barium ferrite magnetic powder was synthesized without adding salt according to the following Comparative Examples.

Ba(NO₃)₂ and Fe(NO₃)₃ · 9H₂O were used for a source material of barium ferrite. A mixture in which Ba(NO₃)₂ and Fe(NO₃)₃ · 9H₂O are mixed in a molar ratio of 1:12 was used for the source material of barium ferrite. Specifically, Ba(NO₃)₂ and Fe(NO₃)₃ · 9H₂O were added to deionized water and stirred for about an hour to prepare a source material of barium ferrite comprised of Ba(NO₃)₂ with a molar concentration of 0.05M and Fe(NO₃)₃ · 9H₂O with a molar concentration of 0.6M.

The source material of barium ferrite was sprayed to form liquid droplets and allowed to pass through a reaction chamber heated at an inlet temperature of about 400 °C, and an outlet temperature of about 850 °C along with a carrier gas (O₂), thereby synthesizing barium ferrite magnetic powder.

Hereinafter, a method of forming barium ferrite magnetic powder using a spray pyrolysis method will be described in more detail.

Power was supplied to a heating means surrounding the circumference of a reaction chamber in a spray pyrolysis apparatus to heat the reaction chamber so as to maintain an inlet temperature of about 400 °C, and an outlet temperature of 850 °C.

A carrier gas was supplied to a sprayer containing the source material of barium ferrite. Oxygen gas (O₂) was used for the carrier gas. The supply flow rate of the carrier gas was set to about 1.5 l/min.

The source material of barium ferrite contained in the sprayer was vibrated by an ultrasonic transducer to generate liquid droplets in the sprayer, and the liquid droplets were introduced into the reaction chamber by the carrier gas and subjected to the pyrolysis and oxidation reaction to synthesize barium ferrite magnetic powder. The barium ferrite magnetic powder formed through the pyrolysis and oxidation reaction was collected by the collector made of a paper filter.

### <Comparative Example 2>

A source material of barium ferrite was used similarly to the Comparative Example 1.

The source material of barium ferrite was sprayed to form liquid droplets and allowed to pass through a reaction chamber heated at an inlet temperature of about 400 °C, and an outlet temperature of about 900 °C along with a carrier gas (O₂) similarly to the Comparative Example 1, thereby synthesizing barium ferrite magnetic powder.

### <Comparative Example 3>

A source material of barium ferrite was used similarly to the Comparative Example 1.

The source material of barium ferrite was sprayed to form liquid droplets and allowed to pass through a reaction chamber heated at an inlet temperature of about 400 °C, and an outlet temperature of about 950 °C along with a carrier gas (O₂) similarly to the Comparative Example 1, thereby synthesizing barium ferrite magnetic powder.

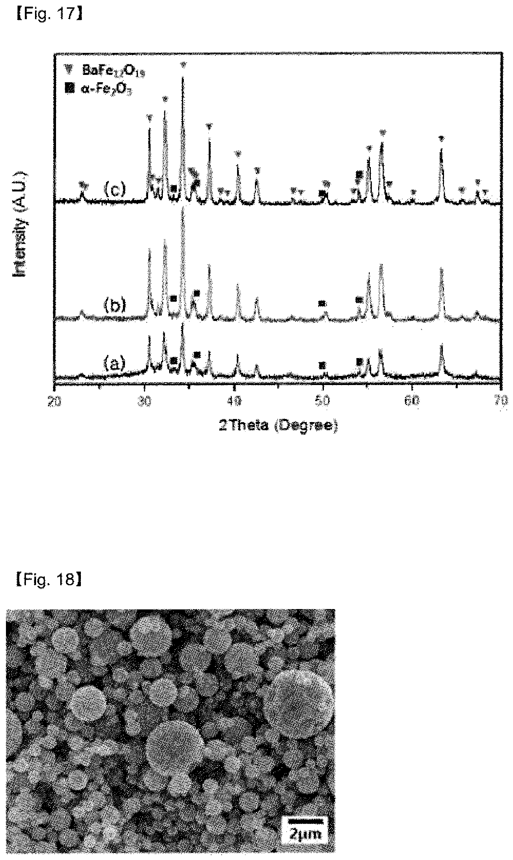

FIG. 17 is a graph illustrating an X-ray diffraction (XRD) pattern of barium ferrite magnetic powder synthesized according to Comparative Examples 1 through 3. FIG. 17A illustrates an X-ray diffraction (XRD) pattern of barium ferrite magnetic powder synthesized according to Comparative Example 1, and FIG. 17B illustrates an X-ray diffraction (XRD) pattern of barium ferrite magnetic powder synthesized according to Comparative Example 2, and FIG. 17C illustrates an X-ray diffraction (XRD) pattern of barium ferrite magnetic powder synthesized according to Comparative Example 3.

Referring to FIG. 17, barium ferrite (BaFe₁₂O₁₉) phases were shown in all Comparative Examples 1 through 3, and hematite (α-Fe₂O₃) crystalline phases were shown in all Comparative Examples 1 through 3.

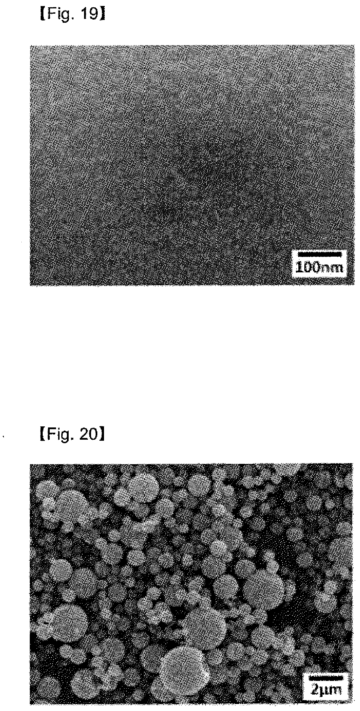

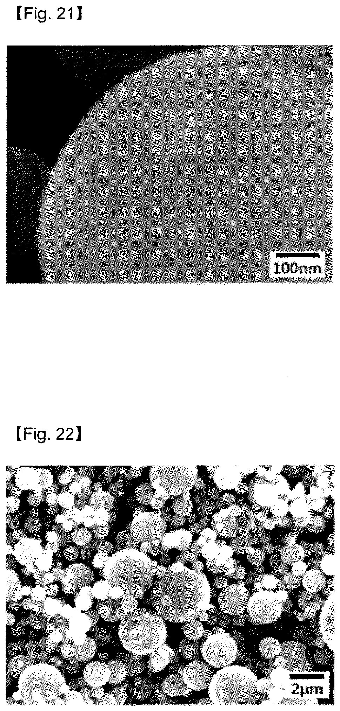

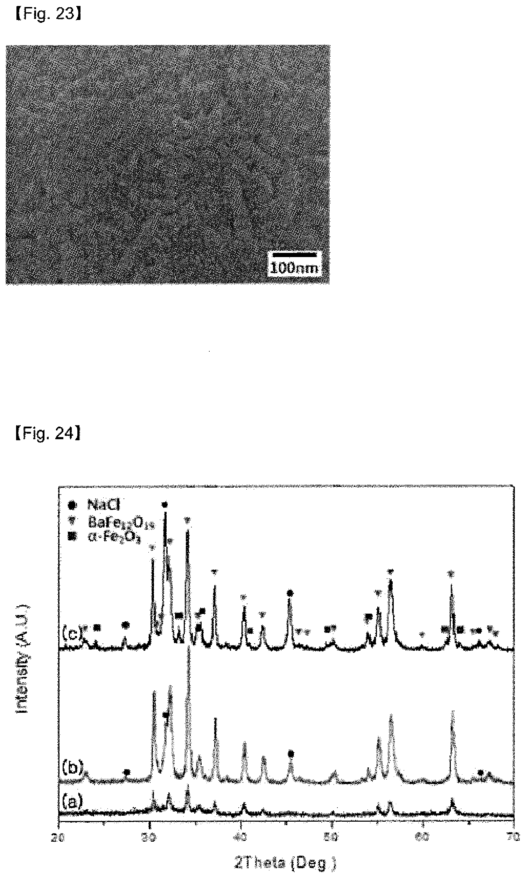

FIGS. 18 and 19 are scanning electron microscope (SEM) photos of barium ferrite magnetic powder synthesized according to Comparative Example 1, and FIGS. 20 and 21 are scanning electron microscope (SEM) photos of barium ferrite magnetic powder synthesized according to Comparative Example 2, and FIGS. 22 and 23 are scanning electron microscope (SEM) photos of barium ferrite magnetic powder synthesized according to Comparative Example 3.

Referring to FIGS. 18 through 23, it is seen that the size of particles was increased as increasing the temperature within the reaction chamber, and also seen that a barium ferrite phase was formed as a result of X-ray diffraction though it is difficult to check due to small sized particles at 850 °C.

When salt was not added as disclosed in the Comparative Examples, hematite with an intermediate phase was found even at a high temperature of 950 °C, but barium ferrite phases having a good crystallinity were obtained even at 850 °C when salt was added (in case of Examples 3 and 6). It illustrates that a ferrite magnet having a high crystallinity can be synthesized even with a short period of reaction time in the unit of second such as a spray pyrolysis method used in the Comparative Examples.

Furthermore, plate shaped and rod shaped particles exist for a single crystalline sample of barium ferrite, and samples to which salt is not added do not grow in a single crystalline shape but grow while being cohered to one another during the growth of particles, thereby causing the deterioration of magnetic characteristics. However, when salt is added, particles do not grow while being cohered to one another but remain in a single crystalline shape, thus exhibiting that magnetic characteristics can be enhanced when crystalline samples are aligned to one another.

### <Example 7>

Considering a molding condition subsequent to manufacturing barium ferrite with salt, an experiment was carried out at temperatures lower than those of Examples 1 through 3, and a smaller amount of salt addition condition was also used.

Ba(NO₃)₂ and Fe(NO₃)₃ · 9H₂O were used for a source material of barium ferrite. A mixture in which Ba(NO₃)₂ and Fe(NO₃)₃ · 9H₂O are mixed in a molar ratio of 1:12 was used for the source material of barium ferrite. Specifically, Ba(NO₃)₂ and Fe(NO₃)₃ · 9H₂O were added to deionized water and stirred for about an hour to prepare a source material of barium ferrite comprised of Ba(NO₃)₂ with a molar concentration of 0.05M and Fe(NO₃)₃ · 9H₂O with a molar concentration of 0.6M.

Sodium chloride (NaCI) was added to the source material of barium ferrite to prepare a starting material. The sodium chloride was weighed to have a weight ratio of 5 % with respect to ferrite magnetic powder with salt (5 weight % with respect to 100 weight % of ferrite magnetic powder with salt) and added.

The starting material was sprayed to form liquid droplets and allowed to pass through a reaction chamber heated at an inlet temperature of about 400 °C, and an outlet temperature of about 800 °C along with a carrier gas (O₂), thereby synthesizing barium ferrite magnetic powder with salt.

Hereinafter, a method of forming barium ferrite magnetic powder with salt using a spray pyrolysis method will be described in more detail.

Power was supplied to a heating means surrounding the circumference of a reaction chamber in a spray pyrolysis apparatus to heat the reaction chamber so as to maintain an inlet temperature of about 400 °C, and an outlet temperature of 850 °C.

A carrier gas was supplied to a sprayer containing the starting material. Oxygen gas (O₂) was used for the carrier gas. The supply flow rate of the carrier gas was set to about 1.5 l/min.

The starting material contained in the sprayer was vibrated by an ultrasonic transducer to generate liquid droplets in the sprayer, and the liquid droplets were introduced into the reaction chamber by the carrier gas and subjected to the pyrolysis and oxidation reaction to synthesize barium ferrite magnetic powder with sodium chloride. The barium ferrite magnetic powder with sodium chloride formed through the pyrolysis and oxidation reaction was collected by the collector made of a paper filter.

### <Example 8>

A starting material was prepared using a source material of barium ferrite and sodium chloride similarly to the Example 7, but sodium chloride was weighed to have a weight ratio of 19% with respect to ferrite magnetic powder with salt (19 weight % with respect to 100 weight % of ferrite magnetic powder with salt) and added.

The starting material was sprayed to form liquid droplets and allowed to pass through a reaction chamber heated at an inlet temperature of about 400 °C, and an outlet temperature of about 800 °C along with a carrier gas (O₂) similarly to the Example 7, thereby synthesizing barium ferrite magnetic powder with salt.

### <Example 9>

A starting material was prepared using a source material of barium ferrite and sodium chloride similarly to the Example 7, but sodium chloride was weighed to have a weight ratio of 31% with respect to ferrite magnetic powder with salt (31 weight % with respect to 100 weight % of ferrite magnetic powder with salt) and added.

The starting material was sprayed to form liquid droplets and allowed to pass through a reaction chamber heated at an inlet temperature of about 400 °C, and an outlet temperature of about 800 °C along with a carrier gas (O₂) similarly to the Example 7, thereby synthesizing barium ferrite magnetic powder with salt.

FIG. 24 is a graph illustrating an X-ray diffraction (XRD) pattern of barium ferrite magnetic powder with sodium chloride synthesized according to Examples 7 through 9. FIG. 24A illustrates an X-ray diffraction (XRD) pattern of barium ferrite magnetic powder with sodium chloride synthesized according to Example 7, and FIG. 24B illustrates an X-ray diffraction (XRD) pattern of barium ferrite magnetic powder with sodium chloride synthesized according to Example 8, and FIG. 24C illustrates an X-ray diffraction (XRD) pattern of barium ferrite magnetic powder with sodium chloride synthesized according to Example 9.

Referring to FIG. 24, sodium chloride (NaCI) and barium ferrite (BaFe₁₂O₁₉) crystalline phases were shown in all Examples 7 through 9, and hematite (α-Fe₂O₃) crystalline phases were shown in Example 9, but the hematite (α-Fe₂O₃) crystalline phases were not shown in Examples 7 and 8.

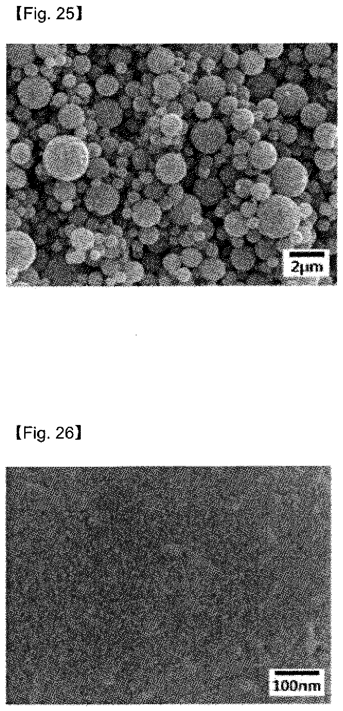

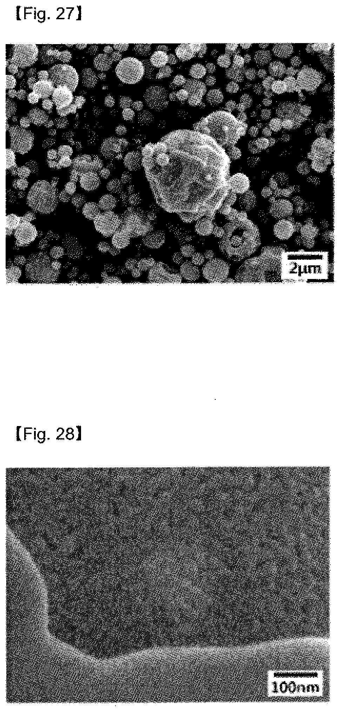

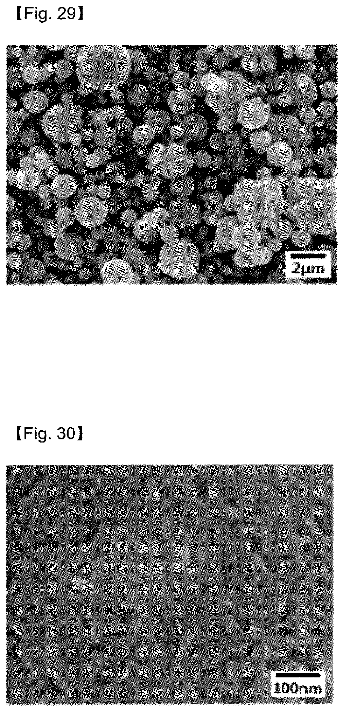

FIGS. 25 and 26 are scanning electron microscope (SEM) photos of barium ferrite magnetic powder with sodium chloride synthesized according to Example 7, and FIGS. 27 and 28 are scanning electron microscope (SEM) photos of barium ferrite magnetic powder with sodium chloride synthesized according to Example 8, and FIGS. 29 and 30 are scanning electron microscope (SEM) photos of barium ferrite magnetic powder with sodium chloride synthesized according to Example 9.

Referring to FIGS. 25 through 30, it is seen that barium ferrite with sodium chloride was well formed, and the formed barium ferrite particles with sodium chloride exhibited a primary particle size of less than 100 nm and a secondary particle size cohered to the primary particles was less than 5 µm. In case where salt was added in a weight ratio of 19% with respect to barium ferrite magnetic powder with salt (in case of Example 8) and in case where salt was added in a weight ratio of 31% (in case of Example 9), an almost similar size of particles was shown. However, in case where salt is added in a weight ratio of 5% (in case of Example 7), the growth of particles did not occur and the particle size was small.

### <Example 10>

Considering a molding condition subsequent to manufacturing barium ferrite with salt, an experiment was carried out at temperatures lower than those of Examples 4 through 6, and a smaller amount of salt addition condition was also used.

Ba(NO₃)₂ and Fe(NO₃)₃ · 9H₂O were used for a source material of barium ferrite. A mixture in which Ba(NO₃)₂ and Fe(NO₃)₃ · 9H₂O are mixed in a molar ratio of 1:12 was used for the source material of barium ferrite. Specifically, Ba(NO₃)₂ and Fe(NO₃)₃ · 9H₂O were added to deionized water and stirred for about an hour to prepare a source material of barium ferrite comprised of Ba(NO₃)₂ with a molar concentration of 0.05M and Fe(NO₃)₃ · 9H₂O with a molar concentration of 0.6M.

Potassium chloride (KCI) was added to the source material of barium ferrite to prepare a starting material. The potassium chloride was weighed to have a weight ratio of 5 % with respect to ferrite magnetic powder with salt (5 weight % with respect to 100 weight % of ferrite magnetic powder with salt) and added.

The starting material was sprayed to form liquid droplets and allowed to pass through a reaction chamber heated at an inlet temperature of about 400 °C, and an outlet temperature of about 800 °C along with a carrier gas (O₂), thereby synthesizing barium ferrite magnetic powder with salt.

Hereinafter, a method of forming barium ferrite magnetic powder with salt using a spray pyrolysis method will be described in more detail.

Power was supplied to a heating means surrounding the circumference of a reaction chamber in a spray pyrolysis apparatus to heat the reaction chamber so as to maintain an inlet temperature of about 400 °C, and an outlet temperature of 800 °C.

A carrier gas was supplied to a sprayer containing the starting material. Oxygen gas (O₂) was used for the carrier gas. The supply flow rate of the carrier gas was set to about 1.5 l/min.

The starting material contained in the sprayer was vibrated by an ultrasonic transducer to generate liquid droplets in the sprayer, and the liquid droplets were introduced into the reaction chamber by the carrier gas and subjected to the pyrolysis and oxidation reaction to synthesize barium ferrite magnetic powder with potassium chloride. The barium ferrite magnetic powder with potassium chloride formed through the pyrolysis and oxidation reaction was collected by the collector made of a paper filter.

### <Example 11>

A starting material was prepared using a source material of barium ferrite and potassium chloride similarly to the Example 10, but potassium chloride was weighed to have a weight ratio of 19% with respect to ferrite magnetic powder with salt (19 weight % with respect to 100 weight % of ferrite magnetic powder with salt) and added.

The starting material was sprayed to form liquid droplets and allowed to pass through a reaction chamber heated at an inlet temperature of about 400 °C, and an outlet temperature of about 800 °C along with a carrier gas (O₂) similarly to the Example 10, thereby synthesizing barium ferrite magnetic powder with salt.

### <Example 12>

A starting material was prepared using a source material of barium ferrite and potassium chloride similarly to the Example 10, but potassium chloride was weighed to have a weight ratio of 31 % with respect to ferrite magnetic powder with salt (31 weight % with respect to 100 weight % of ferrite magnetic powder with salt) and added.

The starting material was sprayed to form liquid droplets and allowed to pass through a reaction chamber heated at an inlet temperature of about 400 °C, and an outlet temperature of about 8050 °C along with a carrier gas (O₂) similarly to the Example 10, thereby synthesizing barium ferrite magnetic powder with salt.

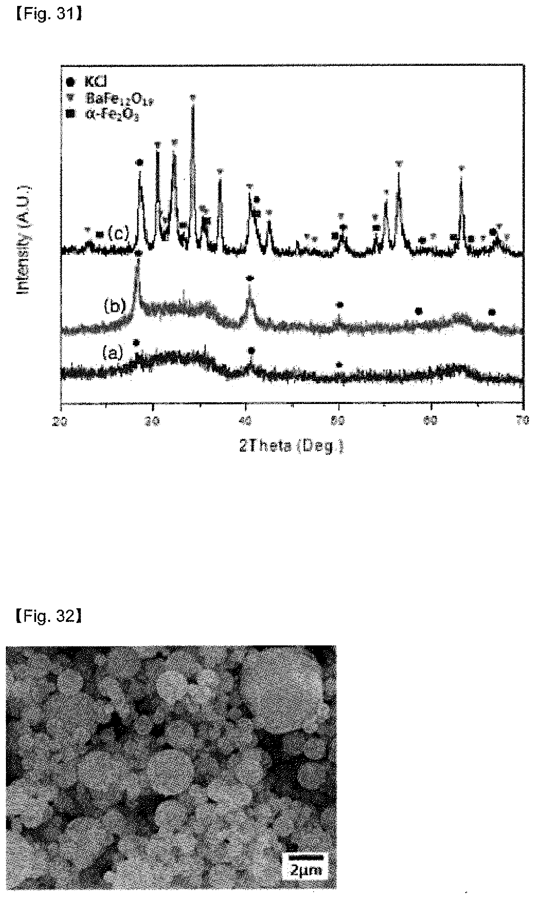

FIG. 31 is a graph illustrating an X-ray diffraction (XRD) pattern of barium ferrite magnetic powder with potassium chloride synthesized according to Examples 10 through 12. FIG. 31A illustrates an X-ray diffraction (XRD) pattern of barium ferrite magnetic powder with potassium chloride synthesized according to Example 10, and FIG. 31B illustrates an X-ray diffraction (XRD) pattern of barium ferrite magnetic powder with potassium chloride synthesized according to Example 11, and FIG. 31C illustrates an X-ray diffraction (XRD) pattern of barium ferrite magnetic powder with potassium chloride synthesized according to Example 12.

Referring to FIG. 31, barium ferrite crystalline phases were shown in Example 12, but barium ferrite crystalline phases were not observed in Examples 10 and 11 excluding a case where salt is added in a weight ratio of 31% with respect to barium ferrite magnetic powder with salt. Potassium chloride crystalline phases were observed in all Examples 10 through 12.

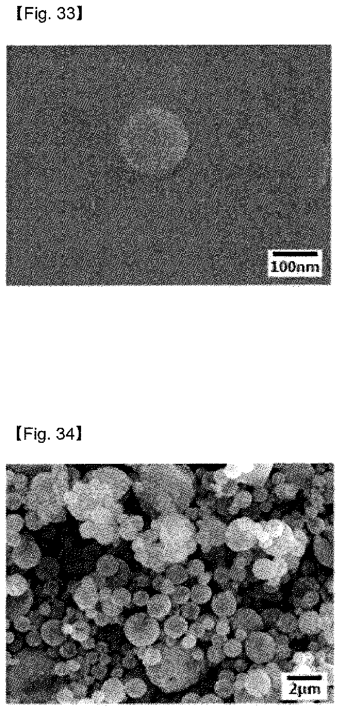

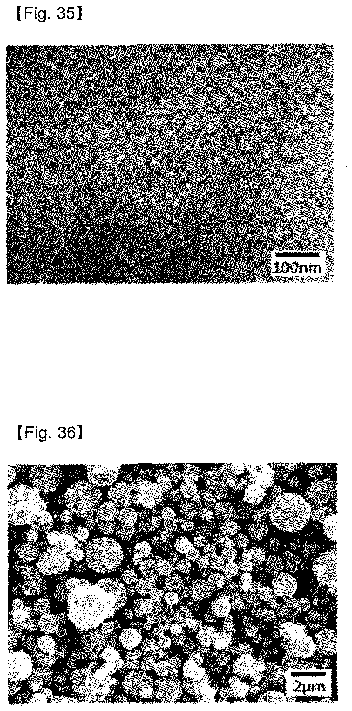

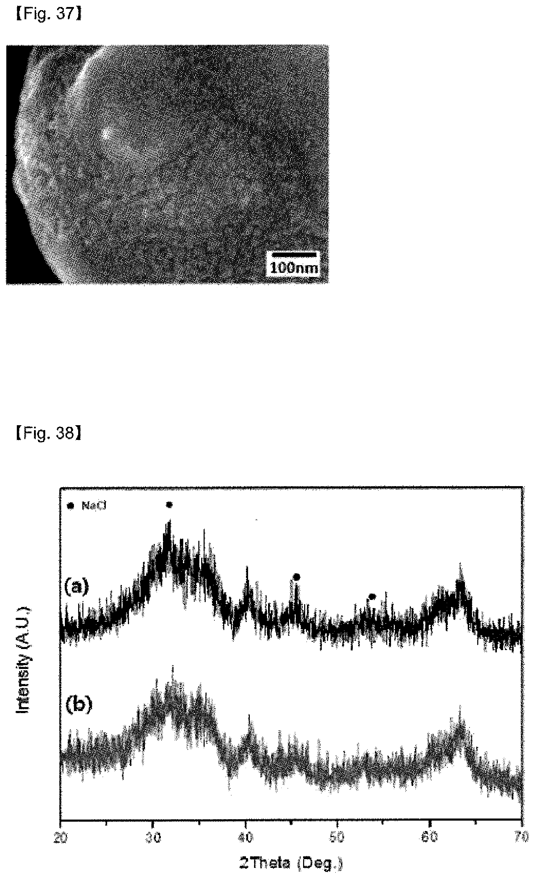

FIGS. 32 and 33 are scanning electron microscope (SEM) photos of barium ferrite magnetic powder with potassium chloride synthesized according to Example 10, and FIGS. 34 and 35 are scanning electron microscope (SEM) photos of barium ferrite magnetic powder with potassium chloride synthesized according to Example 11, and FIGS. 36 and 37 are scanning electron microscope (SEM) photos of barium ferrite magnetic powder with potassium chloride synthesized according to Example 12.

Referring to FIGS. 32 through 37, the form of barium ferrite particles was not clearly observed excluding a case where salt is added in a weight ratio of 31% with respect to barium ferrite magnetic powder with salt (in case of Example 12). In case of Examples 10 and 11, considering that barium ferrite phases were not exhibited in the X-ray diffraction in a collective manner, it is seen that barium ferrite crystalline phases were not formed to form an amorphous state.

### <Example 13>

Considering a molding condition subsequent to manufacturing barium ferrite with salt, an experiment was carried out at temperatures lower than those of Examples 7 through 9, and a smaller amount of salt addition condition was also used.

Ba(NO₃)₂ and Fe(NO₃)₃ · 9H₂O were used for a source material of barium ferrite. A mixture in which Ba(NO₃)₂ and Fe(NO₃)₃ · 9H₂O are mixed in a molar ratio of 1:12 was used for the source material of barium ferrite. Specifically, Ba(NO₃)₂ and Fe(NO₃)₃ · 9H₂O were added to deionized water and stirred for about an hour to prepare a source material of barium ferrite comprised of Ba(NO₃)₂ with a molar concentration of 0.05M and Fe(NO₃)₃ · 9H₂O with a molar concentration of 0.6M.

Sodium chloride (NaCI) was added to the source material of barium ferrite to prepare a starting material. The sodium chloride was weighed to have a weight ratio of 5 % with respect to ferrite magnetic powder with salt (5 weight % with respect to 100 weight % of ferrite magnetic powder with salt) and added.

Similarly to the Example 1, the starting material was sprayed to form liquid droplets and allowed to pass through a reaction chamber heated at an inlet temperature of about 250 °C, and an outlet temperature of about 850 °C along with a carrier gas (O₂), thereby synthesizing barium ferrite magnetic powder with salt.

Hereinafter, a method of forming barium ferrite magnetic powder with salt using a spray pyrolysis method will be described in more detail.

Power was supplied to a heating means surrounding the circumference of a reaction chamber in a spray pyrolysis apparatus to heat the reaction chamber so as to maintain an inlet temperature of about 250 °C, and an outlet temperature of 850 °C.

A carrier gas was supplied to a sprayer containing the starting material. Oxygen gas (O₂) was used for the carrier gas. The supply flow rate of the carrier gas was set to about 1.5 l/min.

The starting material contained in the sprayer was vibrated by an ultrasonic transducer to generate liquid droplets in the sprayer, and the liquid droplets were introduced into the reaction chamber by the carrier gas and subjected to the pyrolysis and oxidation reaction to synthesize barium ferrite magnetic powder with sodium chloride. The barium ferrite magnetic powder with sodium chloride formed through the pyrolysis and oxidation reaction was collected by the collector made of a paper filter.

### <Example 14>

A starting material was prepared using a source material of barium ferrite and sodium chloride similarly to the Example 13, but sodium chloride was weighed to have a weight ratio of 3% with respect to sodium chloride ferrite magnetic powder (3 weight % with respect to 100 weight % of sodium chloride ferrite magnetic powder) and added.

The starting material was sprayed to form liquid droplets and allowed to pass through a reaction chamber heated at an inlet temperature of about 250 °C, and an outlet temperature of about 850 °C along with a carrier gas (O₂) similarly to the Example 13, thereby synthesizing barium sodium chloride ferrite magnetic powder.

FIG. 38 is a graph illustrating an X-ray diffraction (XRD) pattern of barium ferrite magnetic powder with sodium chloride synthesized according to Examples 13 and 14. FIG. 38A illustrates an X-ray diffraction (XRD) pattern of barium ferrite magnetic powder with sodium chloride synthesized according to Example 13, and

FIG. 38B illustrates an X-ray diffraction (XRD) pattern of barium ferrite magnetic powder with sodium chloride synthesized according to Example 14.

Referring to FIG. 38, barium ferrite crystalline phases were not shown and sodium chloride phases were weakly observed in both Examples 13 and 14.

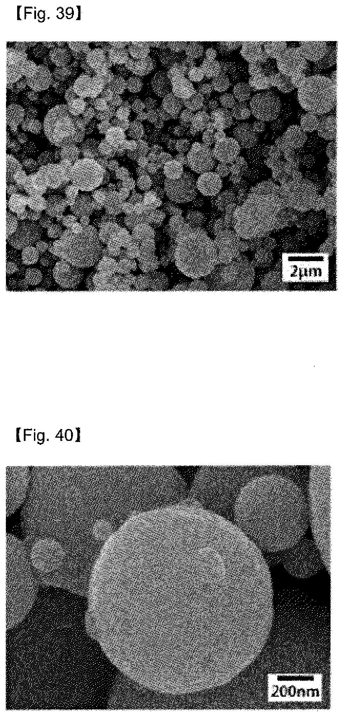

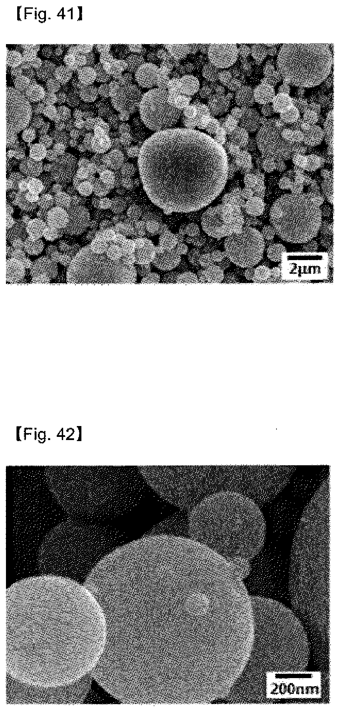

FIGS. 39 and 40 are scanning electron microscope (SEM) photos of barium ferrite magnetic powder with sodium chloride synthesized according to Example 13, and FIGS. 41 and 42 are scanning electron microscope (SEM) photos of barium ferrite magnetic powder with sodium chloride synthesized according to Example 14.

Referring to FIGS. 39 through 42, the form of barium ferrite particles was not clearly observed in both Examples 13 and 14. Considering that barium ferrite phases were not exhibited in the X-ray diffraction in a collective manner, it is seen that barium ferrite crystalline phases were not formed to form an amorphous state.

### <Example 15>

Barium ferrite magnetic powder with salt synthesized according to Example 7 (in case where sodium chloride was added in a weight ratio of 5% with respect to barium ferrite magnetic powder with salt and synthesized at a temperature of 800 °C) was molded and sintered (with spark plasma sintering) to evaluate the magnetic characteristics using the formed sintered body (barium ferrite magnet with salt).

The molding and sintering conditions were as follows. Barium ferrite magnetic powder with salt synthesized according to Example 7 was filled into a molding frame with a carbon material and heated at a heating rate of 100 °C per minute to a target temperature of 700 °C under argon (Ar) atmosphere. The molding frame heated at 700 °C was maintained at a pressure of 100 MPa for two minutes and then cooled to obtain a sintered body (barium ferrite magnet with salt). The manufactured sintered body has a disc type, and was manufactured such that the height of the disc is greater than one half of the diameter thereof.

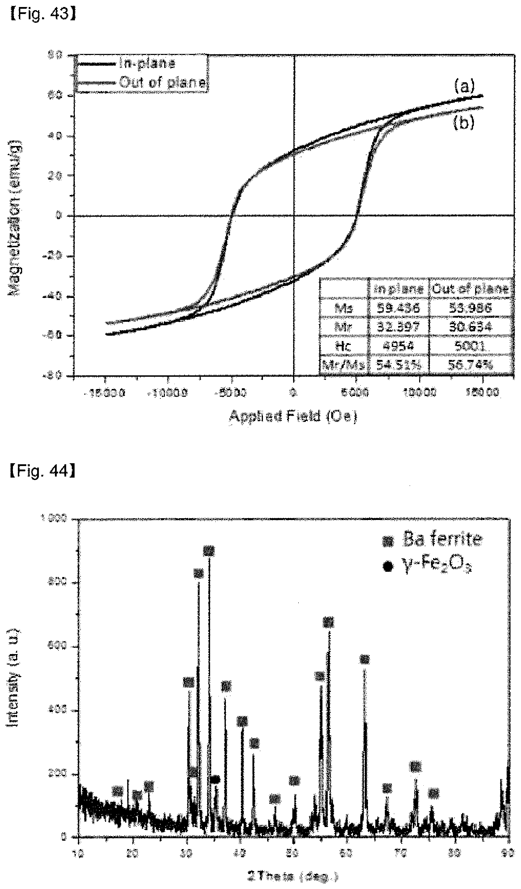

FIG. 43 is a graph in which magnetic characteristics are evaluated using a vibrating sample magnetometer (VSM) for a barium ferrite magnet with salt produced according to Example 15.

Referring to FIG. 43, the in-plane shows a result in which the magnetic characteristics were measured in the horizontal direction of the disc, and each value exhibited a saturated magnetization (Ms) of 59.436 Am²/kg (59.436 emu/g), a residual magnetization (Mr) of 32.397 Am²/kg (32.397 emu/g), and a coercive force (Hc) of 394kA/m (4954 Oe), and thus a Mr/Ms of 54.51 % was exhibited.

The out-of-plane shows a result in which the magnetic characteristics were measured in the vertical direction of the disc, and each value exhibited a saturated magnetization (Ms) of 53.986 Am²/kg (53.986 emu/g), a residual magnetization (Mr) of 30.634 Am²/kg (30.634 emu/g), and a coercive force (He) of 398kA/m (5001 Oe), and thus a Mr/Ms of 56.74% was exhibited.

The Mr/Ms of 50% denotes that magnetic particles are not completely aligned, and the Mr/Ms of 100% denotes that magnetic particles are completely aligned. A value measured in the vertical direction of the disc was 56.74%, and thus exhibited a value slightly higher than that measured in the horizontal direction thereof.

FIG. 44 is an X-ray diffraction graph for a sintered body (barium ferrite magnet with salt) produced according to Example 15.

Referring to FIG. 44, barium ferrite phases were well formed, but γ-Fe₂O₃ phases that were not shown in the X-ray diffraction graph of barium ferrite magnetic powder with salt synthesized in Example 7 were shown. It is seen that barium ferrite inverse reaction occurred by a carbon component emerged from a carbon material mold (molding frame) used during the spark plasma sintering (SPS) process and barium ferrite on a surface of the molded body was decomposed into y-Fe203.

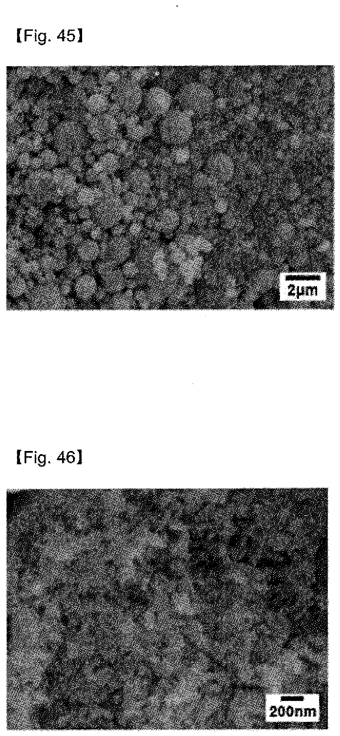

FIGS. 45 and 46 are scanning electron microscope (SEM) photos illustrating a fracture surface of a sintered body (barium ferrite magnet with salt) produced according to Example 15.

Referring to FIGS. 45 and 46, the form of magnetic particles maintained a spherical secondary particle shape as a whole, and a portion that had been partially molten was observed in the fracture surface image. The primary particles exhibited a size of approximately around 100 nm at a portion where the secondary particles were destroyed.

### <Example 16>

Barium ferrite magnetic powder with salt synthesized according to Example 7 (in case where sodium chloride was added in a weight ratio of 5% with respect to barium ferrite magnetic powder with salt and synthesized at a temperature of 800 °C) was molded and sintered (with spark plasma sintering) to evaluate the magnetic characteristics using the formed sintered body (barium ferrite magnet with salt).

The molding and sintering conditions were as follows. Barium ferrite magnetic powder with salt synthesized according to Example 7 was filled into a molding frame with a carbon material and heated at a heating rate of 100 °C per minute to a target temperature of 800 °C under argon (Ar) atmosphere. The molding frame heated at 800 °C was maintained at a pressure of 100 MPa for two minutes and then cooled to obtain a sintered body (barium ferrite magnet with salt). The manufactured sintered body has a disc type, and was manufactured such that the height of the disc is greater than one half of the diameter thereof.

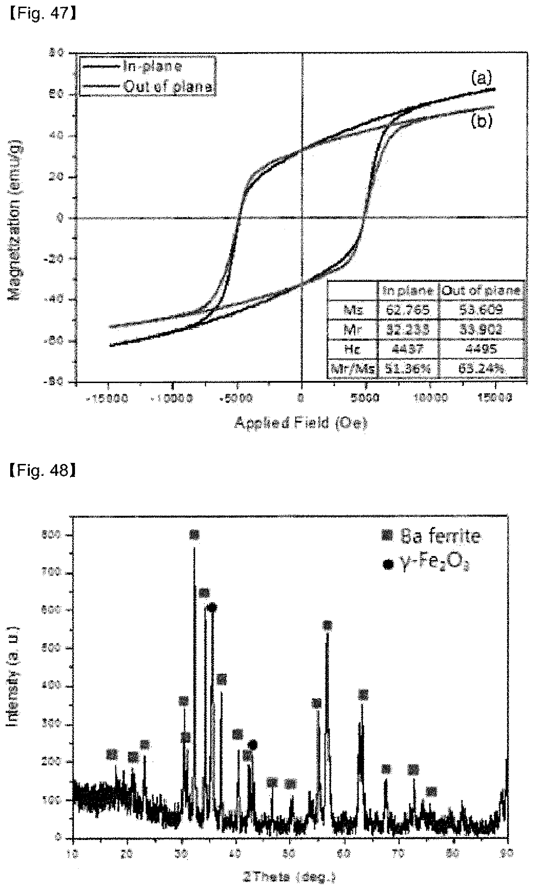

FIG. 47 is a graph in which magnetic characteristics are evaluated using a vibrating sample magnetometer (VSM) for a barium ferrite magnet with salt produced according to Example 16.

Referring to FIG. 47, the in-plane shows a result in which the magnetic characteristics were measured in the horizontal direction of the disc, and each value exhibited a saturated magnetization (Ms) of 62.765 Am²/kg (62.765 emu/g), a residual magnetization (Mr) of 32.233 Am²/kg (32.233 emu/g), and a coercive force (Hc) of 353kA/m (4437 Oe), and thus a Mr/Ms of 51.36% was exhibited.

The out-of-plane shows a result in which the magnetic characteristics were measured in the vertical direction of the disc, and each value exhibited a saturated magnetization (Ms) of 53.609 2. Am²/kg (53.609 emu/g), a residual magnetization (Mr) of 33.902 Am²/kg (33.902 emu/g), and a coercive force (He) of 356kA/m (4495 Oe), and thus a Mr/Ms of 63.24% was exhibited.

In case of a value measured in the vertical direction of the disc, it was 63.24%, and thus the Mr/Ms value was shown to be higher than that measured in the horizontal direction thereof. It denotes that the magnetization easy axis of barium ferrite was aligned in the vertical direction of the disc during the molding process.

FIG. 48 is an X-ray diffraction graph for a sintered body (barium ferrite magnet with salt) produced according to Example 16.

Referring to FIG. 48, barium ferrite phases were well formed, but γ-Fe₂O₃ phases that were not shown in the X-ray diffraction graph of barium ferrite magnetic powder with salt synthesized in Example 7 were shown.

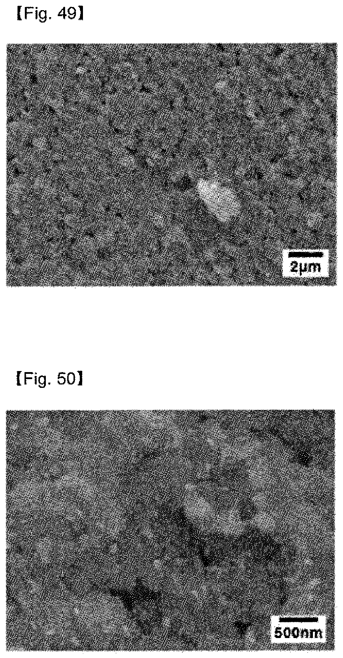

FIGS. 49 and 50 are scanning electron microscope (SEM) photos illustrating a fracture surface of a sintered body (barium ferrite magnet with salt) produced according to Example 16.

Referring to FIGS. 49 and 50, it was difficult to find an original spherical secondary particle shape as a whole, and observed that the added sodium chloride was well molten. It is supposed that relatively well molten salt was contributed to the alignment of barium ferrite particles, and thus expected to obtain a higher alignment level when optimizing conditions for manufacturing and sintering ferrite powder with molten salt.

### <Example 17>

Barium ferrite magnetic powder with salt synthesized according to Example 10 (in case where potassium chloride was added in a weight ratio of 5% with respect to barium ferrite magnetic powder with salt and synthesized at a temperature of 800 °C) was molded and sintered (with spark plasma sintering) to evaluate the magnetic characteristics using the formed sintered body (barium ferrite magnet with salt).

The molding and sintering conditions were as follows. Barium ferrite magnetic powder with salt synthesized according to Example 10 was filled into a molding frame with a carbon material and heated at a heating rate of 100 °C per minute to a target temperature of 700 °C under argon (Ar) atmosphere. The molding frame heated at 700 °C was maintained at a pressure of 100 MPa for two minutes and then cooled to obtain a sintered body (barium ferrite magnet with salt). The manufactured sintered body has a disc type, and was manufactured such that the height of the disc is greater than one half of the diameter thereof.

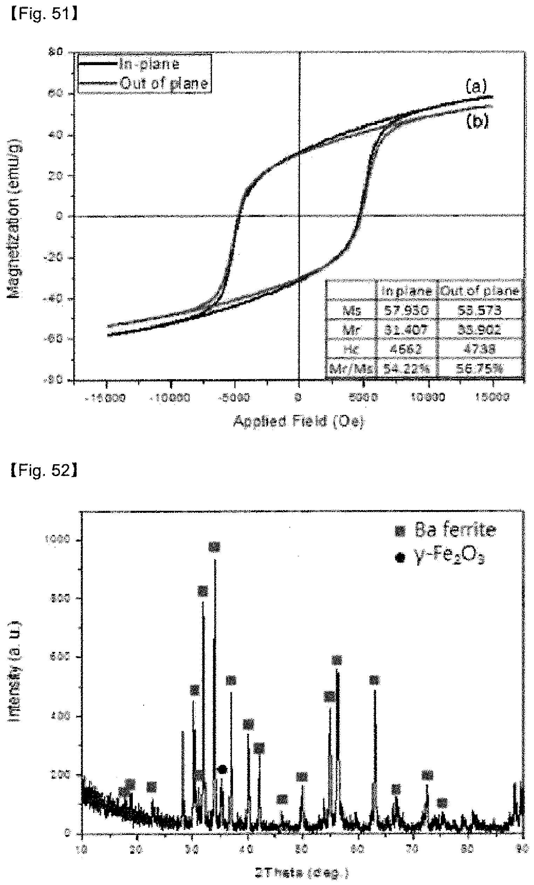

FIG. 51 is a graph in which magnetic characteristics are evaluated using a vibrating sample magnetometer (VSM) for a barium ferrite magnet with salt produced according to Example 17.

Referring to FIG. 51, the in-plane shows a result in which the magnetic characteristics were measured in the horizontal direction of the disc, and each value exhibited a saturated magnetization (Ms) of 57.930 Am²/kg (57.930 emu/g), a residual magnetization (Mr) of 31.407 Am²/kg (31.407 emu/g), and a coercive force (Hc) of 371 kA/m (4662 Oe), and thus a Mr/Ms of 54.22% was exhibited.

The out-of-plane shows a result in which the magnetic characteristics were measured in the vertical direction of the disc, and each value exhibited a saturated magnetization (Ms) of 53.573 Am²/kg (53.573 emu/g), a residual magnetization (Mr) of 33.902 Am²/kg (33.902 emu/g), and a coercive force (Hc) of 377kA/m (4738 Oe), and thus a Mr/Ms of 56.75% was exhibited.

In case of a value measured in the vertical direction of the disc, it was 56.75%, and thus the Mr/Ms value was shown to be higher than that measured in the horizontal direction thereof.

FIG. 52 is an X-ray diffraction graph for a sintered body (barium ferrite magnet with salt) produced according to Example 17.

Referring to FIG. 52, it is seen that barium ferrite phases subsequent to molding and sintering were well formed whereas crystalline peaks for barium ferrite were not shown in Example 10. It is supposed that barium ferrite phases were formed due to heat and pressure during the molding and sintering processes. Furthermore, γ-Fe₂O₃ phases were also observed similarly to Examples 15 and 16.

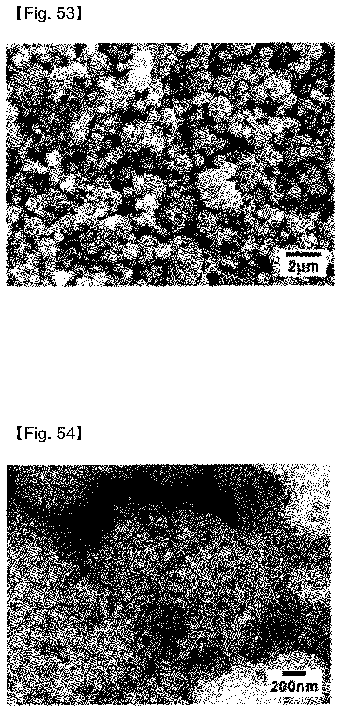

FIGS. 53 and 54 are scanning electron microscope (SEM) photos illustrating a fracture surface of a sintered body (barium ferrite magnet with salt) produced according to Example 17.

Referring to FIGS. 53 and 54, the form of magnetic particles maintained a spherical secondary particle shape as a whole and it was difficult to observe a molten portion. The primary particles that could not have been observed in Example 10 were observed in a size of approximately around 100 nm at a portion where the secondary particles were destroyed.

### <Example 18>

Barium ferrite magnetic powder with salt synthesized according to Example 10 (in case where potassium chloride was added in a weight ratio of 5% with respect to barium ferrite magnetic powder with salt and synthesized at a temperature of 800 °C) was molded and sintered (with spark plasma sintering) to evaluate the magnetic characteristics using the formed sintered body (barium ferrite magnet with salt). The other molding conditions were similar to Example 17, and only the sintering temperature was increased to 800 °C for the experiment.

The molding and sintering conditions were as follows. Barium ferrite magnetic powder with salt synthesized according to Example 10 was filled into a molding frame with a carbon material and heated at a heating rate of 100 °C per minute to a target temperature of 800 °C under argon (Ar) atmosphere. The molding frame heated at 800 °C was maintained at a pressure of 100 MPa for two minutes and then cooled to obtain a sintered body (barium ferrite magnet with salt). The manufactured sintered body has a disc type, and was manufactured such that the height of the disc is greater than one half of the diameter thereof.

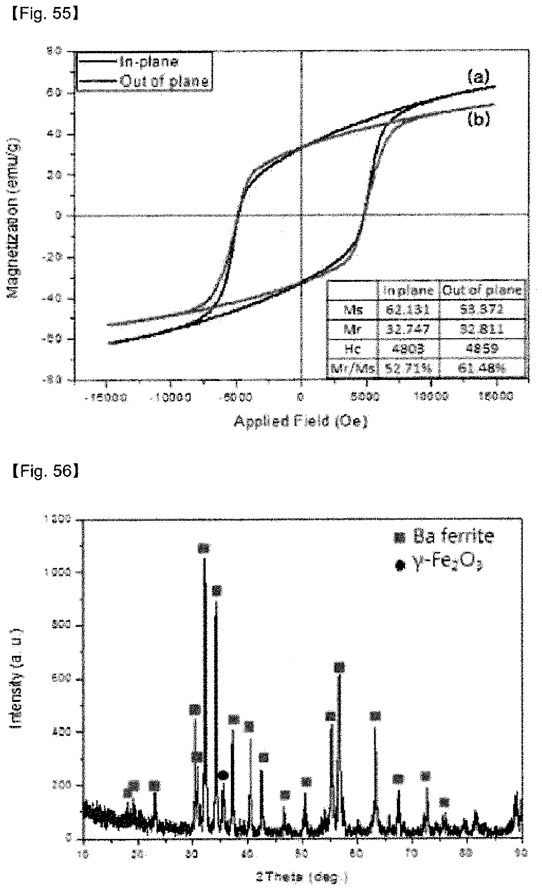

FIG. 55 is a graph in which magnetic characteristics are evaluated using a vibrating sample magnetometer (VSM) for a barium ferrite magnet with salt produced according to Example 18.

Referring to FIG. 55, the in-plane shows a result in which the magnetic characteristics were measured in the horizontal direction of the disc, and each value exhibited a saturated magnetization (Ms) of 62.131 Am²/kg (62.131 emu/g), a residual magnetization (Mr) of Am²/kg (32.747 emu/g), emu/g, and a coercive force (Hc) of 382kA/m (4803 Oe), and thus a Mr/Ms of 52.71 % was exhibited.

The out-of-plane shows a result in which the magnetic characteristics were measured in the vertical direction of the disc, and each value exhibited a saturated magnetization (Ms) of 53.372 Am²/kg (53.372 emu/g), a residual magnetization (Mr) of 32.811 Am²/kg (32.811 emu/g), and a coercive force (Hc) of 387kA/m (4859 Oe), and thus a Mr/Ms of 61.48% was exhibited.

In case of a value measured in the vertical direction of the disc, it was 61.48%, and thus the Mr/Ms value was shown to be higher than that measured in the horizontal direction thereof. It denotes that the alignment of barium ferrite particles occurred in the direction of the magnetization easy axis in the vertical direction of the disc.

FIG. 56 is an X-ray diffraction graph for a sintered body (barium ferrite magnet with salt) produced according to Example 18.

Referring to FIG. 56, it is seen that barium ferrite phases subsequent to molding and sintering were well formed whereas crystalline peaks for barium ferrite were not shown in Example 10. It is supposed that barium ferrite phases were formed due to heat and pressure during the molding and sintering processes. Furthermore, Fe₂O₃ phases due to a carbon inverse reaction were also observed similarly to Examples 15 through 17.

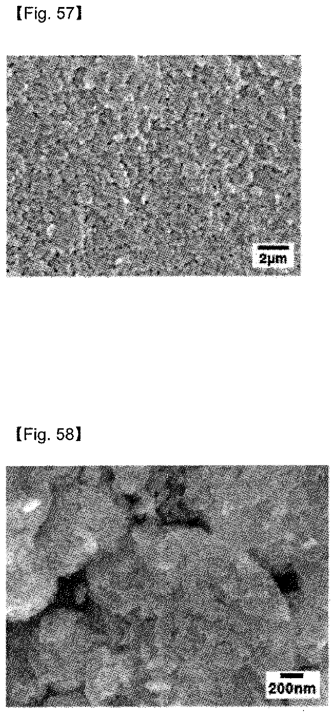

FIGS. 57 and 58 are scanning electron microscope (SEM) photos illustrating a fracture surface of a sintered body (barium ferrite magnet with salt) produced according to Example 18.

Referring to FIGS. 57 and 58, the melting of the added potassium chloride is progressed into a medium state that the boundary surface of particles is being disappeared and thus it is seen that potassium chloride is not completely molten. It is observed that melting was carried out to some extent within a fracture surface.

### <Example 19>

Barium ferrite magnetic powder with salt synthesized according to Example 13 (in case where sodium chloride was added in a weight ratio of 5% with respect to barium ferrite magnetic powder with salt and synthesized at an inlet temperature of 250 °C, and an outlet temperature of 850 °C) was molded and sintered (with spark plasma sintering) to evaluate the magnetic characteristics using the formed sintered body (barium ferrite magnet with salt).

The molding and sintering conditions were as follows. Barium ferrite magnetic powder with salt synthesized according to Example 13 was filled into a molding frame with a carbon material and heated at a heating rate of 100 °C per minute to a target temperature of 800 °C under argon (Ar) atmosphere. The molding frame heated at 800 °C was maintained at a pressure of 100 MPa for five minutes and then cooled to obtain a sintered body (barium ferrite magnet with salt). The manufactured sintered body has a disc type, and was manufactured such that the height of the disc is greater than one half of the diameter thereof.

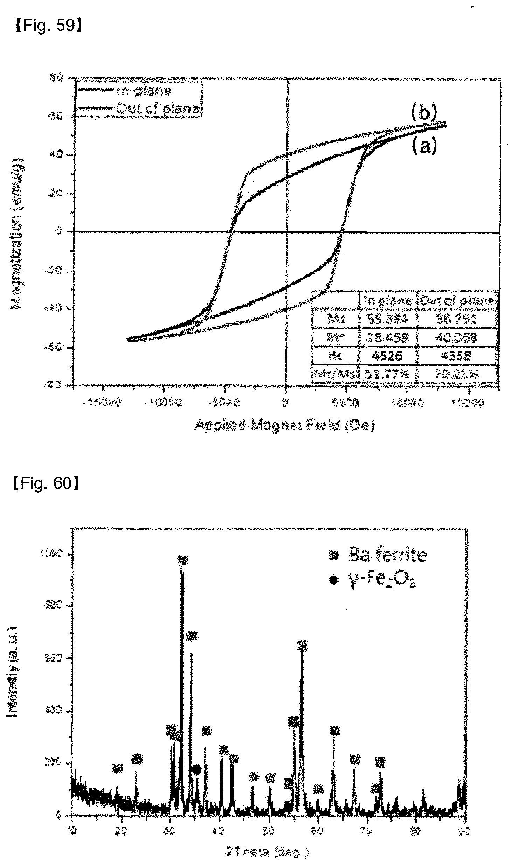

FIG. 59 is a graph in which magnetic characteristics are evaluated using a vibrating sample magnetometer (VSM) for a barium ferrite magnet with salt produced according to Example 19.

Referring to FIG. 59, the in-plane shows a result in which the magnetic characteristics were measured in the horizontal direction of the disc, and each value exhibited a saturated magnetization (Ms) of 55.384 Am²/kg (55.384 emu/g), a residual magnetization (Mr) of 28.458 Am²/kg (28.458 emu/g), and a coercive force (Hc) of 360kA/m (4526 Oe), and thus a Mr/Ms of 51.77% was exhibited.

The out-of-plane shows a result in which the magnetic characteristics were measured in the vertical direction of the disc, and each value exhibited a saturated magnetization (Ms) of 56.751 Am²/kg (56.751 emu/g), a residual magnetization (Mr) of 40.068 Am²/kg (40.068 emu/g), and a coercive force (He) of 363kA/m (4558 Oe), and thus a Mr/Ms of 70.21% was exhibited.

In case of a value measured in the vertical direction of the disc, it was 70.21%, and thus the Mr/Ms value was shown to be higher than that measured in the horizontal direction thereof. It denotes that the magnetization easy axis of barium ferrite was aligned in the vertical direction of the disc during the molding process.

FIG. 60 is an X-ray diffraction graph for a sintered body (barium ferrite magnet with salt) produced according to Example 19.

Referring to FIG. 60, it is seen that barium ferrite phases subsequent to molding and sintering were well formed whereas crystalline peaks for barium ferrite were not shown in Example 13. It is supposed that barium ferrite phases were formed due to heat and pressure during the molding and sintering processes.

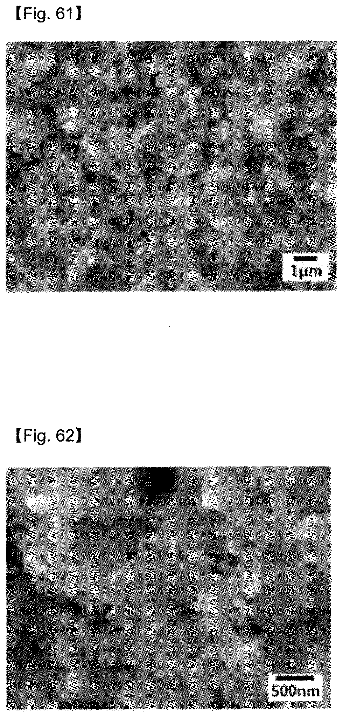

FIGS. 61 and 62 are scanning electron microscope (SEM) photos illustrating a fracture surface of a sintered body (barium ferrite magnet with salt) produced according to Example 19.

Referring to FIGS. 61 and 62, it was difficult to find an original spherical secondary particle shape as a whole, and observed that the added sodium chloride was well molten. It is supposed that relatively well molten salt was contributed to the alignment of barium ferrite particles, and thus expected to obtain a higher alignment level when optimizing conditions for manufacturing and sintering ferrite powder with molten salt.

### <Example 20>

Barium ferrite magnetic powder with salt synthesized according to Example 14 (in case where sodium chloride was added in a weight ratio of 3% with respect to barium ferrite magnetic powder with salt and synthesized at an inlet temperature of 250 °C, and an outlet temperature of 850 °C) was molded and sintered (with spark plasma sintering) to evaluate the magnetic characteristics using the formed sintered body (barium ferrite magnet with salt).

The molding and sintering conditions were as follows. Barium ferrite magnetic powder with salt synthesized according to Example 14 was filled into a molding frame with a carbon material and heated at a heating rate of 100 °C per minute to a target temperature of 800 °C under argon (Ar) atmosphere. The molding frame heated at 800 °C was maintained at a pressure of 100 MPa for five minutes and then cooled to obtain a sintered body (barium ferrite magnet with salt). The manufactured sintered body has a disc type, and was manufactured such that the height of the disc is greater than one half of the diameter thereof.

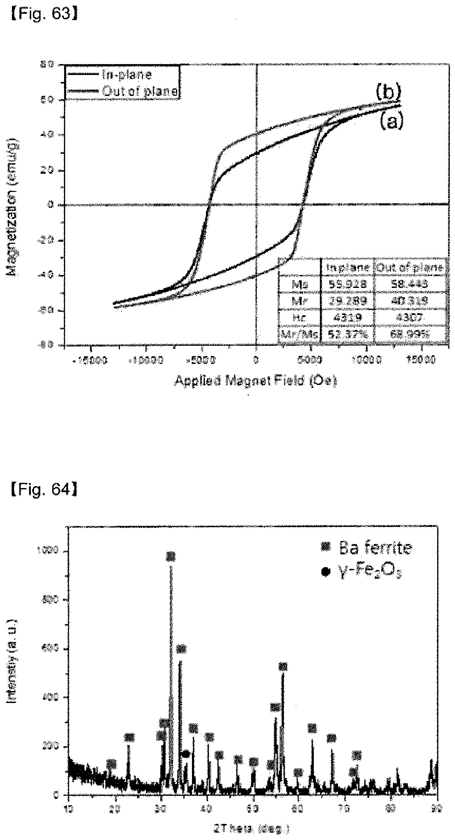

FIG. 63 is a graph in which magnetic characteristics are evaluated using a vibrating sample magnetometer (VSM) for a barium ferrite magnet with salt produced according to Example 20.

Referring to FIG. 63, the in-plane shows a result in which the magnetic characteristics were measured in the horizontal direction of the disc, and each value exhibited a saturated magnetization (Ms) of 55.928 Am²/kg (55.928 emu/g), a residual magnetization (Mr) of 29.289 Am²/kg (29.289 emu/g), and a coercive force (He) of 4319 Oe, and thus a Mr/Ms of 52.37% was exhibited.

The out-of-plane shows a result in which the magnetic characteristics were measured in the vertical direction of the disc, and each value exhibited a saturated magnetization (Ms) of 58.443 Am²/kg (58.443 emu/g), a residual magnetization (Mr) of 40.319 Am²/kg (40.319 emu/g), and a coercive force (He) of 334kA/m (4307 Oe), and thus a Mr/Ms of 68.99% was exhibited.

In case of a value measured in the vertical direction of the disc, it was 68.99%, and thus the Mr/Ms value was shown to be higher than that measured in the horizontal direction thereof. It denotes that the magnetization easy axis of barium ferrite was aligned in the vertical direction of the disc during the molding process.

FIG. 64 is an X-ray diffraction graph for a sintered body (barium ferrite magnet with salt) produced according to Example 20.

Referring to FIG. 64, it is seen that barium ferrite phases subsequent to molding and sintering were well formed whereas crystalline peaks for barium ferrite were not shown in Example 14. It is supposed that barium ferrite phases were formed due to heat and pressure during the molding and sintering processes.

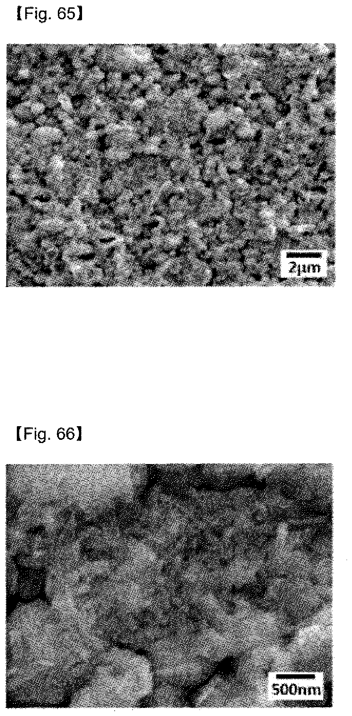

FIGS. 65 and 66 are scanning electron microscope (SEM) photos illustrating a fracture surface of a sintered body (barium ferrite magnet with salt) produced according to Example 20.

Referring to FIGS. 65 and 66, molten portions and non-molten portions were exhibited in a mixed manner and it is supposed to be a phenomenon that occurred due to a low content of molten salt compared to Example 19 with the same sintering condition. However, a relatively high Mr/Ms value (68.99%) was exhibited and thus it is expected to obtain a higher alignment level when optimizing conditions for manufacturing and sintering ferrite powder with molten salt.

Samples formed with incomplete ferrite phases during the process of synthesizing ferrite magnetic powder with salt may be also applicable since they exhibited ferrite phases during the sintering process as disclosed in Examples 17 through 20.

## Claims

1. A method of manufacturing a molded and sintered ferrite magnet with salt, the method comprising:
preparing a source material of the ferrite to be synthesized;
preparing a salt having a melting point lower than a synthetic temperature of the ferrite to be synthesized;
mixing the source material of the ferrite with the salt;
synthesizing ferrite magnetic powder with salt while melting the salt; and
molding and sintering the ferrite magnetic powder with salt into a desired form to obtain a molded and sintered ferrite magnet with salt,
wherein the molded and sintered ferrite magnet with salt comprises 65 to 99.9 weight % of ferrite and 0.1 to 35 weight % of salt,
the sintering is carried out in a temperature condition of melting the salt or a temperature and pressure condition of melting the salt and
the salt is melt during the sintering to form a salt matrix between the ferrite particles, and
wherein the sintering process is carried out at temperatures higher than those at which a particle growth of ferrites occurs.

2. The method of claim 1, wherein the molded and sintered ferrite magnet with salt has a structure in which a plurality of ferrites are uniformly dispersed in the salt matrix, and/or
the ferrite is formed of secondary particles, wherein
the secondary particles have a form in which a plurality of primary particles having a size smaller than that of the secondary particles are conglomerated along with salt.

3. The method of claim 2, wherein the secondary particles are spherical particles having a diameter of 0.1 to 20 µm or non-spherical particles having a diameter of 0.1 to 1000 µm, and the primary particles have a diameter of 5 to 1000 nm.

4. The method according to any one of claims 1 to 3, wherein the salt comprises at least one or more selected from a chloride metal salt, a nitric acid metal salt, and a sulfuric acid metal salt, wherein preferably
the chloride metal salt is one or more selected from NaCl, KCl, LiCl, CaCl₂ and MgCl₂, and/or
the nitric acid metal salt is one or more selected from NaNO₃, KNO₃, LiNO₃, Ca(NO₃)₂ and Mg(NO₃)₂, and/or
the sulfuric acid metal salt is one or more selected from Na₂SO₄, K₂SO₄, Li₂SO₄, CaSO₄ and MgSO₄.

5. The method according to any one of claims 1 to 4, wherein the source material of the ferrite comprises one or more selected from Ba(NO₃)₂, BaCO₃, BaCl₂, BaSO₄, BaO₂, Sr(NO₃)₂, SrCO₃, SrCl₂, SrSO₄, Sr(OH)₂, La(NO₃)₃, LaCl₃, La₂(SO₄)₃ and La(OH)₃ and one or more kinds of materials selected from Fe(NO₃)₃, FeCO₃, FeCl₃, Fe₂O₃, FeCl₂ and Fe(OH)₃ and/or
the ferrite is a hexagonal ferrite preferably having
a form of MT₁₂O₁₉, wherein
M comprises one or more selected from Ba, Sr and La, and
T comprises one or more selected from Fe, or the combination of Fe and Co.

6. The method according to any one of claims 1 to 5, wherein the source material of the ferrite comprises one or more selected from Ba(NO₃)₂, BaCO₃, BaCl₂, BaSO₄, BaO₂, Sr(NO₃)₂, SrCO₃, SrCl₂, SrSO₄, Sr(OH)₂, La(NO₃)₃, LaCl₃, La₂(SO₄)₃ and La(OH)₃ and one or more kinds of materials selected from Fe(NO₃)₃, FeCO₃, FeCl₃, Fe₂O₃, FeCl₂ and Fe(OH)₃, Co(NO₃)₂ and
said synthesizing the ferrite magnetic powder with salt comprises:
supplying power to a heating means surrounding the circumference of a reaction chamber in a spray pyrolysis apparatus and heating the reaction chamber to maintain a temperature higher than the melting point of the salt in a consistent manner;
supplying a carrier gas to a sprayer containing a mixture of the source material of the ferrite and the salt;
vibrating the mixture contained in the sprayer by an ultrasonic transducer to generate liquid droplets in the sprayer; and
introducing the liquid droplets into the reaction chamber by the carrier gas and allowing the liquid droplets introduced into the reaction chamber to be subjected to the pyrolysis and oxidation reaction to synthesize ferrite magnetic powder with salt.

## Patentansprüche

1. Verfahren zum Herstellen eines gegossenen und gesinterten Ferritmagneten mit Salz, wobei das Verfahren die folgenden Schritte umfasst:
Vorbereiten eines Ausgangsmaterials des Ferrits, der synthetisiert werden soll;
Vorbereiten eines Salzes, das einen Schmelzpunkt besitzt, der niedriger als eine Synthesetemperatur des zu synthetisierenden Ferrits ist;
Mischen des Ausgangsmaterials des Ferrits mit dem Salz;
Synthetisieren des magnetischen Ferritpulvers mit Salz, während das Salz geschmolzen wird; und
Gießen und Sintern des magnetischen Ferritpulvers mit Salz in eine gewünschte Form, um einen gegossenen und gesinterten Ferritmagneten mit Salz zu erhalten,
wobei der gegossene und gesinterte Ferritmagnet mit Salz 65 bis 99,9 Gew.-% Ferrit und 0,1 bis 35 Gew.-% Salz umfasst,
wobei das Sintern unter einer Temperaturbedingung zum Schmelzen des Salzes oder unter einer Temperatur- und Druckbedingung zum Schmelzen des Salzes ausgeführt wird, und
das Salz während des Sinterns schmilzt, um eine Salzmatrix zwischen den Ferritpartikeln zu bilden, und
wobei das Sinterverfahren bei Temperaturen ausgeführt wird, die höher als die Temperaturen sind, bei denen ein Partikelwachstum von Ferriten erfolgt.

2. Verfahren nach Anspruch 1, wobei der gegossene und gesinterte Ferritmagnet mit Salz eine Struktur aufweist, bei der eine Vielzahl von Ferriten in der Salzmatrix gleichmäßig verteilt sind, und/oder
der Ferrit aus Sekundärpartikeln gebildet ist, wobei
die Sekundärpartikel eine Form aufweisen, bei der eine Vielzahl von Primärpartikeln, die eine Größe aufweisen, die kleiner als die der Sekundärpartikel ist, mit Salz konglomeriert.

3. Verfahren nach Anspruch 2, wobei die Sekundärpartikel kugelförmige Partikel sind, die einen Durchmesser im Bereich von 0,1 bis 20 µm aufweisen, oder nicht kugelförmige Partikel sind, die einen Durchmesser im Bereich von 0,1 bis 1000 µm aufweisen, wobei die Primärpartikel einen Durchmesser im Bereich von 5 bis 1000 nm aufweisen.

4. Verfahren nach einem der Ansprüche 1 bis 3, wobei das Salz wenigstens ein oder mehrere Salze umfasst, die aus Metallchloridsalz, Metallsalpetersäuresalz und Metallschwefelsäuresalz ausgewählt werden, wobei vorzugsweise
das Metallchloridsalz eines oder mehrere Salze sind, die aus NaCl, KCl, LiCl, CaCl₂ und MgCl₂ ausgewählt werden, und/oder
das Salpetersäuresalz eines oder mehrere Salze sind, die aus NaNO₃, KNO₃, Li-NO₃, Ca(NO₃)₂ und Mg(NO₃)₂ ausgewählt werden, und/oder
das Metallschwefelsäuresalz eine oder mehrere Salze sind, die aus Na₂SO₄, K₂SO₄, Li₂SO₄, CaSO₄ und MgSO₄ ausgewählt werden.

5. Verfahren nach einem der Ansprüche 1 bis 4, wobei das Ausgangsmaterial des Ferrits einen oder mehrere Stoffe, die aus Ba(NO₃)₂, BaCO₃, BaCl₂, BaSO₄, BaO₂, Sr(NO₃)₂, SrCO₃, SrCl₂, SrSO₄, Sr(OH)₂, La(NO₃)₃, LaCl₃, La₂(SO₄)₃ und La(OH)₃ ausgewählt werden, und eine oder mehrere Arten von Material, die aus Fe(NO₃)₃, FeCO₃, FeCl₃, Fe₂O₃, FeCl₂ und Fe(OH)₃ ausgewählt werden, umfasst, und/oder
wobei der Ferrit ein hexagonaler Ferrit ist, der vorzugsweise die Form von MT₁₂O₁₉ aufweist, wobei
M ein oder mehrere Elemente umfasst, die aus Ba, Sr und La ausgewählt werden, und
T ein oder mehrere Elemente umfasst, die aus Fe oder der Kombination von Fe und Co ausgewählt werden.

6. Verfahren nach einem der Ansprüche 1 bis 5, wobei das Ausgangsmaterial des Ferrits einen oder mehrere Stoffe, die aus Ba(NO₃)₂, BaCO₃, BaCl₂, BaSO₄, BaO₂, Sr(NO₃)₂, SrCO₃, SrCl₂, SrSO₄, Sr(OH)₂, La(NO₃)₃, LaCl₃, La₂(SO₄)₃ und La(OH)₃ ausgewählt werden, und eine oder mehrere Arten von Material, die aus Fe(NO₃)₃, FeCO₃, FeCl₃, Fe₂O₃, FeCl₂ und Fe(OH)₃, Co(NO₃)₂ ausgewählt werden, umfasst, und
wobei das Synthetisieren des magnetischen Ferritpulvers mit Salz die folgenden Schritte umfasst:
Zuführen von Leistung zu Heizmitteln, die den Umfang einer Reaktionskammer in einer Sprühpyrolyse-Vorrichtung umgeben, und Heizen der Reaktionskammer, um beständig eine Temperatur aufrechtzuerhalten, die höher als der Schmelzpunkt des Salzes ist;
Zuführen eines Trägergases zu einer Sprühvorrichtung, wobei das Gas eine Mischung des Ausgangsmaterials des Ferrits und das Salz umfasst;
Rütteln der Mischung, die in der Sprühvorrichtung enthalten ist, durch einen Ultraschallwandler, um in der Sprühvorrichtung Flüssigkeitströpfchen zu erzeugen; und
Einbringen der Flüssigkeitströpfchen in die Reaktionskammer durch das Trägergas und Zulassen, dass die Flüssigkeitströpfchen, die in die Reaktionskammer eingebracht werden, einer Pyrolyse und einer Oxidationsreaktion unterzogen werden, um das magnetische Ferritpulver mit Salz zu synthetisieren.

## Revendications

1. Procédé de fabrication d'un aimant en ferrite moulé et fritté avec un sel, le procédé comportant les étapes consistant à :
préparer un matériau source de la ferrite à synthétiser ;
préparer un sel ayant un point de fusion plus bas qu'une température de synthétisation de la ferrite à synthétiser ;
mélanger le matériau source de la ferrite avec le sel ;
synthétiser une poudre magnétique de ferrite avec le sel tout en faisant fondre le sel ; et
mouler et fritter la poudre magnétique de ferrite avec le sel dans une forme voulue pour obtenir un aimant en ferrite moulé et fritté avec le sel,
dans lequel l'aimant en ferrite moulé et fritté avec le sel comporte 65 à 99,9 % en poids de ferrite et 0,1 à 35 % en poids de sel,
le frittage est réalisé dans une condition de température de fusion du sel ou une condition de température et de pression de fusion du sel et
le sel est fondu pendant le frittage pour former une matrice de sel entre les particules de ferrite, et
dans lequel le processus de frittage est réalisé à des températures supérieures à celles auxquelles une croissance de particules de ferrites a lieu.

2. Procédé selon la revendication 1, dans lequel l'aimant en ferrite moulé et fritté avec un sel possède une structure dans laquelle une pluralité de ferrites sont uniformément dispersées dans la matrice de sel, et/ou
la ferrite est formée de particules secondaires, dans lequel
les particules secondaires ont une forme dans laquelle les particules d'une pluralité de particules primaires ayant une taille plus petite que celle des particules secondaires sont agglomérées avec le sel.

3. Procédé selon la revendication 2, dans lequel les particules secondaires sont des particules sphériques ayant un diamètre de 0,1 à 20 µm ou des particules non sphériques ayant un diamètre de 0,1 à 1 000 µm, et les particules primaires ont un diamètre de 5 à 1 000 nm.

4. Procédé selon l'une quelconque des revendications 1 à 3, dans lequel le sel comporte au moins un ou plusieurs sels choisis parmi un sel métallique de chlorure, un sel métallique d'acide nitrique et un sel métallique d'acide sulfurique, dans lequel de préférence
le sel métallique de chlorure est un ou plusieurs éléments choisis parmi NaCl, KCl, LiCl, CaCl₂ et MgCl₂, et/ou
le sel métallique d'acide nitrique est un ou plusieurs éléments choisis parmi NaNO₃, KNO₃, LiNO₃, Ca(NO₃)₂ et Mg(NO₃)₂, et/ou
le sel métallique d'acide sulfurique est un ou plusieurs éléments choisis parmi Na₂SO₄, K₂SO₄, Li₂SO₄, CaSO₄ et MgSO₄.

5. Procédé selon l'une quelconque des revendications 1 à 4, dans lequel le matériau source de la ferrite comporte un ou plusieurs éléments choisis parmi Ba(NO₃)₂, BaCO₃, BaCl₂, BaSO₄, BaO₂, Sr(NO₃)₂, SrCO₃, SrCl₂, SrSO₄, Sr(OH)₂, La(NO₃)₃, LaCl₃, La₂(SO₄)₃ et La(OH)₃ et un ou plusieurs types de matériaux choisis parmi Fe(NO₃)₃, FeCO₃, FeCl₃, Fe₂O₃, FeCl₂ et Fe(OH)₃ et/ou
la ferrite est une ferrite hexagonale ayant de préférence une forme de MT₁₂O₁₉, dans laquelle
M comporte un ou plusieurs éléments choisis parmi Ba, Sr et La, et
T comporte un ou plusieurs éléments choisis parmi Fe ou la combinaison de Fe et Co.

6. Procédé selon l'une quelconque des revendications 1 à 5, dans lequel le matériau source de la ferrite comporte un ou plusieurs éléments choisis parmi Ba(NO₃)₂, BaCO₃, BaCl₂, BaSO₄, BaO₂, Sr(NO₃)₂, SrCO₃, SrCl₂, SrSO₄, Sr(OH)₂, La(NO₃)₃, LaCl₃, La₂(SO₄)₃ et La(OH)₃ et un ou plusieurs types de matériaux choisis parmi Fe(NO₃)₃, FeCO₃, FeCl₃, Fe₂O₃, FeCl₂ et Fe(OH)₃, CO(NO₃)₂ et
ladite synthétisation de la poudre magnétique de ferrite avec le sel comporte les étapes consistant à :
fournir du courant à des moyens de chauffage entourant la circonférence d'une chambre de réaction dans un appareil de pyrolyse par pulvérisation et chauffer la chambre de réaction pour maintenir une température plus élevée que le point de fusion du sel d'une manière constante ;
fournir un gaz porteur à un pulvérisateur contenant un mélange du matériau source de la ferrite et du sel ;
faire vibrer le mélange contenu dans le pulvérisateur par un transducteur à ultrasons pour générer des gouttelettes de liquide dans le pulvérisateur ; et
introduire les gouttelettes de liquide dans la chambre de réaction par le gaz porteur et permettre aux gouttelettes de liquide introduites dans la chambre de réaction d'être soumises à la pyrolyse et à une réaction d'oxydation pour synthétiser la poudre magnétique de ferrite avec le sel.
